# EUROPEAN PATENT SPECIFICATION

(11) **EP 1 815 972 B1**
(45) Date of publication and mention of the grant of the patent: **18.12.2013**
(21) Application number: 06011673.8
(22) Date of filing: 06.06.2006
(51) Int. Cl.: B30B 15/14, G05B 19/418, B21D 43/02

(54) **Press line system and method**
Pressenstrassensystem und Verfahren
Système de train de presses et procédé

(30) Priority: 06.02.2006 US 765183 P; 06.02.2006 US 765182 P; 04.04.2006 WO PCT/SE2006/050055
(43) Date of publication of application: 08.08.2007
(73) Proprietor: ABB Research Ltd., 8050 Zürich (CH)
(72) Inventor: Bosga, Sjoerd, 723 53 Västeras (SE); Segura Golorons, Marc, Barcelona (ES)
(74) Representative: Savela, Reino Aleksi

(56) References cited:
- EP-A1- 1 615 090
- EP-A2- 0 434 632
- EP-A2- 1 279 447
- DE-A1- 10 358 991
- GB-A- 2 258 186
- US-A- 5 588 344
- US-A1- 2004 003 729
- US-A1- 2004 240 981
- US-B1- 6 242 877

## Description

### TECHNICAL FIELD.

The invention concerns a press line of the type used for pressings, stamping, drawing or punching of principally metal parts from blanks. In particular, the invention discloses a press line comprising an improved mechanical press that may be synchronized with other devices in the press line in a dynamic or adaptive way. The invention is of particular advantage for use in producing stamped or pressed parts for the automobile industry and for white goods.

### TECHNICAL BACKGROUND

Mechanical presses are commonly used to produce stamped automobile parts from metal forms such as steel blanks or workpieces. One or more such mechanical presses are usually arranged in a press line to carry out a series of operations on a blank or workpiece.

Press lines were automated in the late 1970's by using mechanical arms to load-unload the parts from the presses. During the late 1980's robots where introduced into press shops to do the same function. The control system (normally a Programmable Logic Controller or PLC) typically managed all the information coming from the robots and the presses and gave digital authorisations to the press and other devices in the press line to load, stamp and unload. Press line systems operated in an asynchronous way, so that if a robot arrived early to unload it had to wait until the press was open enough. Similarly it could happen that a robot arrived late to load, which meant that the press waited. Such and other actions result in move-stop-move cycles for the robots, and for a press, which caused extra wear the gearboxes and may also have caused wear in the motor brakes. Also the speed rate of the line could not go beyond certain limits. An important improvement in press lines comprising robot loaders/unloaders was achieved with industrial robots from ABB which incorporated a function called Sync to Sensor. By means of a sensor or an encoder, the robot with sync to sensor can read the position of the press and the robot controller then dynamically adapt the robots speed so that the robot arrives at the unloading point "on time". A corresponding improvement was achieved for the loading operation. The loading robot reads the position of the unloader through a bus connection and the robot controller adapts the robots speed to be "on time" to load as well. Thus far then a press line has been developed in which a robot loader/unloader can be synchronised to certain movements of a press.

However mechanical presses have a fixed cycle. Traditionally the press drive and power transmission system, or kinematics, of a mechanical press is driven via a flywheel. The function of the flywheel is to store the necessary energy to make a cycle. The flywheel is connected and disconnected to the kinematics by means of a clutch and brake system (which may be pneumatic or hydraulic). Maintenance is required for any clutch or brake in the drive chain.

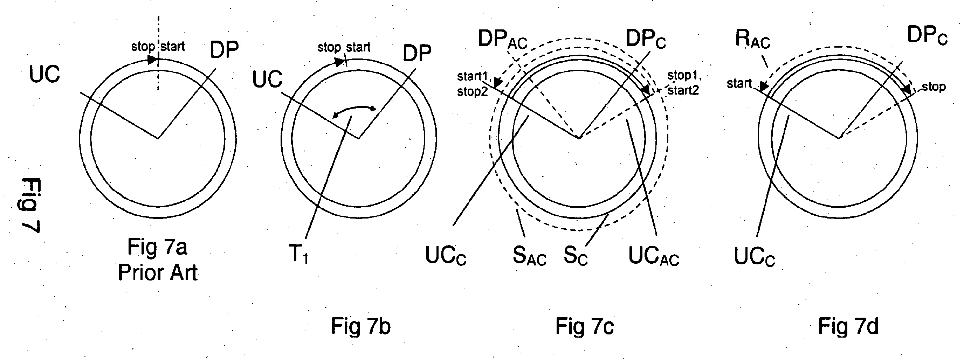

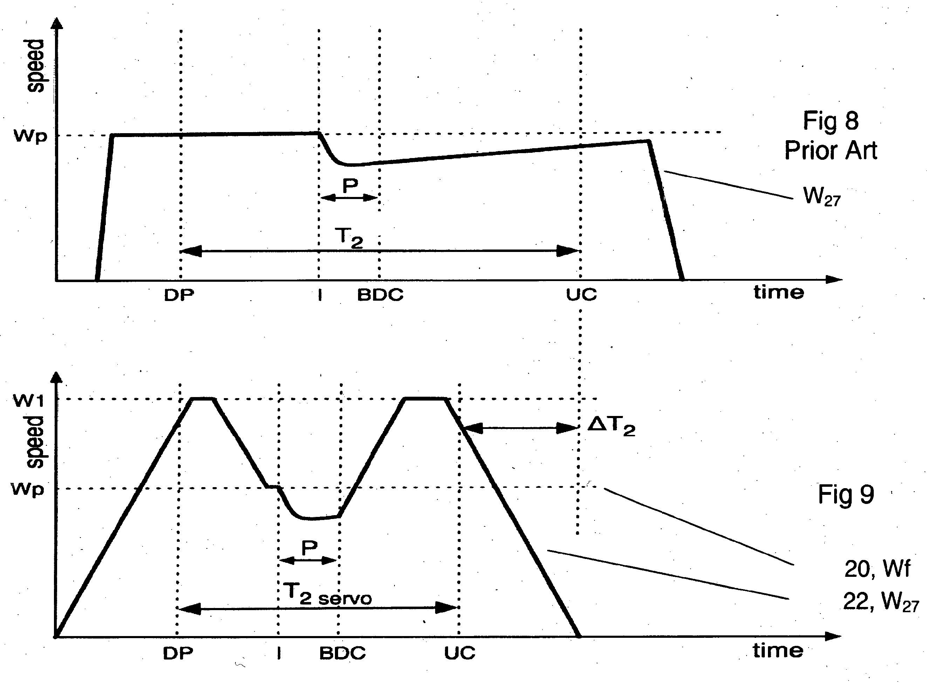

Once setup to run with a given die, the working cycles of traditional flywheel driven mechanical presses, link presses, crank presses and similar are fixed. For example once the speed of the flywheel is set and the clutch engaged, the press will move following a fixed pattern, such as that of Figs 7a, 8 (Prior Art) repeated as many times as required. Press speed is described here in terms of a rotational speed of the motor or of a mechanical transmission part such as an eccentric, or linear speed of the press ram or slide. Having a fixed cycle means that any adjustment to, or optimization of, the press cycle requires an interruption of production and adjustment of the mechanical components of the drive transmission, the flywheel etc. in order to modify the press cycle. Figure 8 (Prior Art) shows a general diagram for a press production cycle of a traditional mechanical press, a speed profile, expressed in terms of an eccentric speed W₂₇ against time. Production cycle time, the total time for a complete production cycle from start to finish and including one press cycle, normally includes a short acceleration time at the beginning of the press cycle up to pressing speed Wp, a time period at constant pressing speed Wp, a time period P during the actual pressing operation when speed normally drops, a time after pressing during which speed gradually increases back to pressing speed, and finally a time period of deceleration or braking when the press is brought to a standstill at the end of the press cycle. Finally, and usually when the press is being unloaded and re-loaded, the press normally remains at a standstill for a period of time. The production cycle thus begins with the start of a press cycle and ends at the end of a press cycle plus any standstill time.

The press is normally brought to a standstill by mechanical braking. Figure 8 (Prior Art) shows a general speed profile diagram including a complete production cycle expressed in terms of ram or slide speed against time. The speed profile shows a cycle which begins with ram position at Top Dead Centre (TDC) and the ram then moving to a lower position until a pressing stage beginning with point of impact I between press die and workpiece. The ram continues to move downward to Bottom Dead Centre (BDC), the lowest ram position, press fully closed. After BDC the ram is accelerated back up toward TDC at which point it is in a fully open position again. Traditional mechanical presses are limited to running a fixed cycle, and other devices in a press line must be synchronised to the press to achieve short cycle times to optimise a press cycle to any other constraint, such as for a complete production cycle of the whole press line. Only the start point of the press cycle may be varied to adapt to a faster or slower loader.

According to prior art is previously known from US 2004/0003729 a press drive method and a press drive unit comprising two drive systems. A first drive system for driving a fly wheel with a main motor and driving the drive shaft through a clutch disposed between the flywheel and the drive shaft, and a second drive system for driving the drive shaft at a variable speed. In EP-Al-1279447 is disclosed a punch press, in which a ram axis control means rotates a servo motor that drives the ram into a rise and fall motion and thereby moves the punch tool up and down. The ram axis control means has a motor speed pattern generation unit, and a motor speed pattern is generated based on a calculated plate material transfer distance. The motor speed may be varied and the motor speed pattern is generated in advance of the pressing cycle. Further, from EP-A-1615090 is previously known a synchronized control system for e.g. a line of presses, comprising a plurality of presses performing a cyclical movement and a plurality of piece transfer devices. For each piece transfer device an optimal piece collection path is set in relation to the cycle of the press immediately upstream, and an optimal piece positioning path is set in relation to the cycle of the press immediately downstream. Synchronization is achieved by adjusting the speed of each transfer device and thereby its path to said preset piece collection path and piece positioning path.

### SUMMARY OF THE INVENTION

The aim of the present invention is to provide an improved method for operating a press line and a system comprising such an improved press line. This and other aims are obtained by a method, and a system characterised by the attached independent claims. Advantageous embodiments are described in sub-claims to the above independent claims.

According to an embodiment of the invention a method for operating a press line is provided, said press line comprising at least one mechanical press with a variable speed electric drive motor, a ram, a mechanical means for operating said press, and comprising at least one other device for loading, unloading or pressing, which said other device is any from the group of: a loader, an unloader, a robot, another press. The method comprises the step of performing a synchronization during at least one pressing or non-pressing part of a press cycle, which synchronization comprises synchronizing a movement of said press to a movement or position of at least one said other device in said press line, by controlling and varying the speed of said variable speed electric drive motor in a continuous or dynamic or adaptive manner. The method is characterized by synchronizing an unloader device or robot during at least one part of a press cycle as a slave to said press, and then synchronizing a loader device or robot as a slave to the unloader device or robot, and then synchronizing said press as a slave to the loader device or robot.

According to another embodiment of the invention a method for operating a press line is provided comprising controlling said other device during the at least one pressing or non-pressing a part of a press cycle and synchronizing the movement of the said other device to a movement of said press, another device or another press in said press line.

According to another embodiment of the invention a method for operating a press line is provided comprising controlling the said other device in order to synchronize to a movement or position of a device downstream of said other device in said press line during a first part of a press cycle and by controlling the movement of the said other device in order to synchronize it to a movement or position of a device upstream of said other device in said press line during a second part of the press cycle.

According to an embodiment of the invention a method for operating a press line is provided comprising controlling the said other device in order to operate as fast as possible during a first part of a press cycle and by controlling the movement of said press in order to operate the press as fast as possible in a second part of the press cycle, wherein the said other device may be any from the group of: a loader, an unloader, a robot, another press.

According to an embodiment of the invention a method for operating a press line is provided comprising controlling a loader or unloader device or robot arranged to load, respective unload said press and also control the device to operate as an unloader, respective loader of another press.

According to another embodiment of the invention a method for operating a press line is provided wherein a robot control unit calculates a path for a robot, and calculates motion or position setpoint values for a press and speed and/or position control values to a control unit or drive unit of a press.

According to an embodiment of the invention a method for operating a press line is provided comprising controlling the speed of at least one electric drive motor and optimising the said press line dependent on parameters from any of the group of: a state of a downstream process; a state of an upstream process; overall power or energy consumption; smoothing of power consumption peaks.

According to another embodiment of the invention a method for operating a press line is provided comprising controlling the speed of a said at least one electric drive motor during the at least one pressing or non-pressing part of a press cycle of said press so as to vary and be greater than the speed of said drive motor during a pressing part of the press cycle.

According to another embodiment of the invention a method for operating a press line is provided comprising controlling said at least one drive motor such that said press cycle carried out in said first rotation direction comprises a step of reversing said drive motor at the end of each complete press cycle and operating in a second rotational direction.

According to another embodiment of the invention a method for operating a press line is provided comprising controlling said at least one drive motor such that said press cycle carried out in said first rotation direction comprises a step of reversing said drive motor at the end of each complete press cycle before beginning a new press cycle in the first rotational direction.

According to another embodiment of the invention a method for operating a press line is provided comprising controlling said motor such that said motor is decelerated to a reduced speed or a zero speed by means in part of regenerative braking.

According to another embodiment of the invention a method for operating a press line is provided wherein said press line includes at least one press comprising a second drive motor or actuator arranged connected to said ram such that by controlling the speed of said second drive motor a movement of said press may be varied during at least one part of a press cycle.

According to an aspect of the invention a press line including at least one mechanical press is described that comprises a variable speed electric drive motor, a ram, a mechanical means for operating said press, and at least one other device for loading, unloading or pressing, which said other device is any from the group of: a loader, an unloader, a robot, another press. The press is arranged so that, during at least one pressing or non-pressing part of a press cycle, the press enters a synchronization state in which the speed of said drive motor may be varied and the speed of said drive motor is controlled in a continuous or dynamic or adaptive manner, such that a movement of said press is synchronized to a movement or position of at least one said other device in said press line, and an unloader device or robot is synchronized during at least one part of a press cycle as a slave to said press, and then a loader device or robot is synchronized as a slave to the unloader device or robot, and then said press is synchronized as a slave to the loader device or robot.

The variable speed direct drive between motor and crank (or ram) enables the speed of the press along the slide stroke to be dynamically controlled during different parts of a press cycle. Parts of a press cycle such as: before the moving die contacts the workpiece or blank to be pressed; after die closing and during a part-cycle in which the workpiece is being pressed; and after die opening again and during the part-cycle between end of pressing and start of pressing the next workpiece.

The control system of the improved press line preferably comprises a closed loop arrangement composed of device-to-press synchronisation, device to device synchronisation, and press to device synchronisation. Thus in some embodiments this may comprise at least in part a triangle arrangement of robot-to-press synchronisation, robot-to-robot synchronisation and press-to-robot synchronisation. The ability to synchronize the press to an external device is enabled by means of a mechanical press arranged for operation with a variable speed drive motor providing the means for a press to operate at variable speeds. The control system of the improved press line allows press lines to achieve higher production rates by optimizing the coordination of movements of robots and presses.

The improved motor drive and control method allows the motor speed during parts of a total production cycle to be varied, something which is not possible for flywheel presses of the prior art. The motor speed may even be varied in a continuous or dynamic or adaptive manner so that motor speed and/or ram speed are not limited to one or more predetermined speeds. In contrast to prior art presses, an improved mechanical press, such as that described in a patent application US 60/765183 , is arranged with a motor speed control means which is variable between zero and a maximum speed providing a rotational speed W1 of the eccentric or crankshaft which may be greater than the pressing speed Wp of the eccentric. In some embodiments the speed may vary between a negative speed, ie speed in a reverse direction, through zero and up to a maximum of say W1 in a forward direction, as detailed below in the description of the preferred embodiments. In the prior art, mechanical presses with a flywheel are limited to a fixed crankshaft speed because the flywheel speed is normally more-or-less constant.

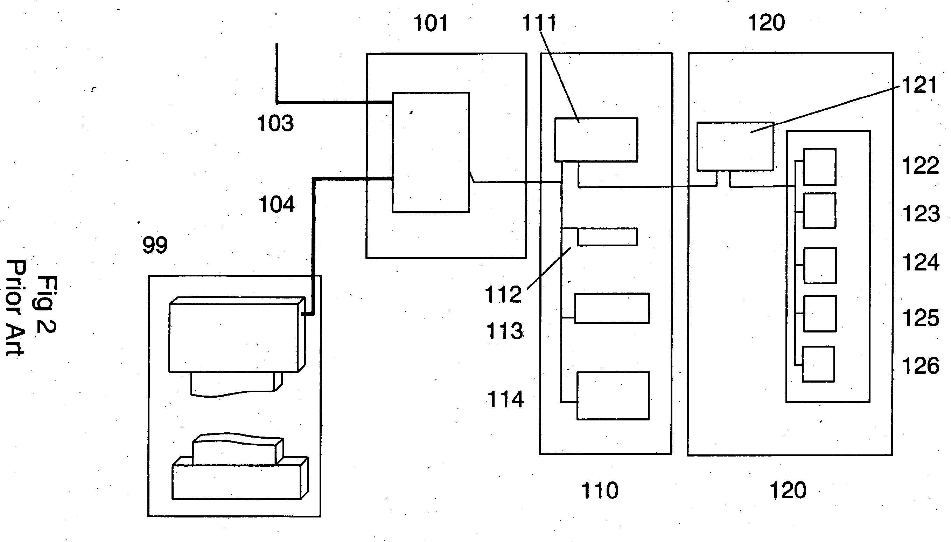

A press line of the Prior Art comprising one traditional mechanical press is shown schematically in Figure 2. It shows a press 99 arranged with an electrical drive controller 101 for the main press motor, a press control Programmable Logic Controller or PLC 110 for controlling the press motion, and a press safety controller 120 for controlling the press safety switches, and emergency stop switches arranged on and around the press.

In the improved press line the motion of the improved mechanical press may be adapted to the operation of other machines involved in a production sequence. Press motion may be optimised in relation to other machines in a production sequence. For example the press motion may be optimised to actions by external devices for example, when workpieces are loaded in the press and/or stamped parts unloaded from the press by transfer devices or other automated devices. Such other machines in the production sequence may comprise one or more industrial robots or manipulator arms. Controlling the press in synchronisation with control of the feeding by automatic feeders, other feeders, robot loaders/unloaders, etc provides improved control and opportunities of synchronization of feeder/loader/unloader motion and press motion, providing in turn, for example, reduced overall production cycle times without compromising pressing quality. In control terms, the improved press comprised in the improved press line may be run such that a press is a slave to an unloader device in a part of the press cycle. The press construction and control system also permit the press to be run as a slave to the loader device in another part of the same press cycle. This variability in control configuration is simply not possible using a traditional mechanical press powered by a flywheel where the press motion in a press cycle is fixed from the moment that the clutch is engaged.

Typically the preferred advantage of the improved press line compared to a press line that uses one or more traditional mechanical presses is a shortened production cycle time. When compared to press lines comprised of traditional mechanical presses advantages of the invention may include:
o Controllability: while a preset motion would be appropriate during the stamping process part of a press cycle, a control may be applied during the rest of the motion cycle. The following advantages and features can thus be obtained:
o new opportunities to optimise press cycle time by configuring the press to synchronise as slave to another device as well as, or instead of, synchronising the other device as a slave to the press in one or more parts of a press cycle,
o increased speed during opening/closing the press (while for example maintaining original speed during the stamping part of the cycle), resulting in reduced cycle times,
o adapting the speed profile using speed control to reduce audible noise, vibration, stresses eg. by reducing the speed just before impact during press closing,
o speed variation between a target pressing speed Wp and zero during pressing to optimise pressing process result or quality.

In another aspect of the invention, the improved press line comprises at least one mechanical press with two or more electric drive motors as described in international application WO/SE2006/050055 . In this improved press, a second motor is added to a mechanical press. The most important function of the second motor is to drive the press during that/those part(s) of the cycle where the press is not actually pressing. For the actual pressing stage, the flywheel may still be used as today. The clutch and brake, while still needed, may be much simpler and cheaper than in the traditional mechanical press. This solution achieves the performance of a servo drive press type without the need for very large electrical power installations. The solution is especially suited as an add-on, retrofit or refurbishment option for existing presses. In addition, an option to use both motors at the same time, preferably during the working (pressing) part of the press cycle for example, is provided.

In contrast to prior art presses, the motor of the improved mechanical press, whether it is a servo press first described in US 60/765183, or the hybrid servo press of WO/SE2006/050055 is operated so that the speed during a press cycle is variable between zero and a maximum speed providing a rotational speed W1 of the eccentric which may be greater than the pressing speed Wp of the eccentric. In some embodiments the speed may vary between a negative speed and zero, meaning a speed in a reverse direction, as well as speed in a forward direction between zero and W1, as detailed below in the description of the preferred embodiments.

In another embodiment of the invention the required dimensions of the motor of the improved press are reduced by arranging the press and the press control to allow the motor a greater part of the press cycle in which to accelerate up to the required speed(s). In one or more advantageous embodiments the improved press control methods are so arranged that a complete press cycle is provided which is in excess of the traditional 360 degree crank rotation angle, or in terms of TDC position twice past TDC, and may yet still have a shorter total production cycle time for the complete production cycle when compared to flywheel-based mechanical presses of similar tonnage. The press cycle comprising a crank angle rotation of more than 360 degrees may be achieved in either of at least two ways, as described in detail in US 60/765183 servo or the WO/SE2006/050055 hybrid press. Summarily the methods of these embodiments comprise reversing a press at the end of a cycle and either starting the next cycle from a position before the stop position of the previous cycle; or, by reversing a press at the end of the cycle and running the following complete cycle in the reverse direction to the direction of rotation of the first press cycle.

In a synchronisation between robot-to-press, robot-to-robot and/or press-to-robot synchronisation according to an embodiment of the invention the loader robot may be controlled in, for example, four stages such as:
synchronised to unloader, free, unloading the previous press being synchronized to press, free;
the unloader robot also: synchronized to press, free, loading the next press synchronized to next unloader, free.
Of course there may be some variations at beginning and end of the line. The press has typically two stages: synchronized to loader or unloader, and free.

The primary advantage of the improved press line is that it provides greater opportunity for optimization of a press line by coordinating the motion of one press, any presses or all presses in the press line and feeder or transfer mechanisms loaders/unloaders such as loading/unloading robots, in the process or press line. Coordination between presses and/or presses and loaders/unloaders may be carried out by, for example, controlling such a line using a single controller. Coordination may be optimised dependent on parameters such as: a state of a downstream process; or a state of an upstream process or another consideration such as overall power or energy consumption; smoothing power consumption peaks in the press line.

In a preferred embodiment of the method of the invention the method may be carried out or controlled by one or more computing devices comprising one or more microprocessor units or computers. The control unit(s) comprise memory means for storing one or more computer programs for carrying out the improved methods for controlling the operation of one or more mechanical presses. Preferably such computer programs contain instructions for the processor to perform the method as mentioned above and described in more detail below. In another embodiment the computer program is provided recorded on a computer readable data carrier such as a DVD, an optical or a magnetic data device, or supplied via a data network from a server, data server or similar.

### BRIEF DESCRIPTION OF THE DRAWINGS

Embodiments of the invention will now be described, by way of example only, with particular reference to the accompanying drawings in which:
FIGURE 1 is a schematic block diagram for an improved press line according to an embodiment of the invention;
FIGURE 2 (Prior Art) is a schematic diagram showing a known press line;
FIGURE 3 is a schematic diagram showing an improved press line according to another embodiment of the invention;
Figure 4 (Prior Art) is a schematic diagram for traditional mechanical press and also showing a diagram for a press cycle according to the Prior Art;
Figure 5 is a schematic diagram for an improved mechanical press of the servo type according an embodiment of the improved press line;
Figure 6 is a schematic diagram for an improved mechanical press of the hybrid type according an embodiment of the improved press line;
Figure 7a (Prior Art) shows a standard 360 degree press cycle according to a known press cycle;
Figures 7b-7d shows in schematic diagrams press cycles in relation to start/stop position and rotation direction according to embodiments of the invention;
Figure 8 (Prior Art) is a schematic diagram showing a speed-time profile according to a press cycle for a known mechanical press of a known press line;
Figure 9 is a schematic diagram showing a speed-time profile for a press cycle of an improved press which may be comprised in an embodiment of the improved press line;
Figure 10 is a schematic flowchart for a method to operate an improved mechanical press comprising a flywheel and clutch according to an embodiment of the invention;
Figure 11 is a schematic chart for a method to synchronise one or more devices and a press comprising synchronisation states of slave or free in an improved press line according to an embodiment of the invention;
Figure 12 is a schematic flowchart for a method to operate an improved mechanical press comprising a flywheel and clutch which may be comprised in another embodiment of the improved press line invention;
Figure 13 is a schematic flowchart for a method to operate an improved mechanical press according to another embodiment of the improved press line invention;
Figure 14 is a schematic flowchart for a method to operate an improved mechanical press according to an embodiment of the improved press line invention comprising a hybrid-type press;
Figure 15 is a schematic flowchart showing synchronisation states of slave or free for press and loader/unloader which synchronisation states may change during a press cycle;
Figure 16 is a schematic diagram showing part of a bi-directional press cycle in relation to positions for DP and UC angles;
Figure 17 is a schematic diagram showing an improved press line in which robot control units comprise synchronisation calculation means and control instruction generating means for the press and other devices according to another preferred embodiment of the invention;
Figure 18 is a schematic diagram for robot-press-robot synchronisation of a triangle pattern;
Figure 19 is a speed profile for a bi-directional press cycle of the improved press line according to another preferred embodiment of the invention;
Figure 20 is a diagram of robot synchronisation relative two presses for part of a press cycle of the improved press line according to another embodiment of the invention.

### DETAILED DESCRIPTION OF THE EMBODIMENTS

Figure 2 shows a press line layout according to the Prior Art, as mentioned above. The layout of this Prior Art arrangement will first be described in order to simplify explanation of the improvements according to the invention. Figure 2 shows a press 99 arranged with a drive 101 (or electrical drive controller 101) for the main electric drive motor of the press. The motions of the press are controlled by a press controller 110. Press controller 110 comprises a press controller 111 PLC (PLC, Programmable Logic Controller). Press controller 110 controls power to the drive 101, may receive inputs from distributed I/O devices 112, from encoders 113 or sensors and may also be arranged with a press HMI 114 (Human machine interface), ie a press control panel or graphic press control panel.

A separate controller, press safety controller 120 is arranged connected to all the press safety switches, and emergency stop switches arranged on and around the press. The press safety controller 120 includes a press safety controller PLC 121 which is also connected to the motor drive 101 and arranged to stop press motion if an unsafe situation is detected by an open switch or by an alarm or emergency button being pressed. The press safety controller PLC 121 is also connected to the clutch and brake operating valves or switches 126, and also arranged to stop press motion if an unsafe situation arises. The press safety controller PLC may receive input from safety devices such as emergency stop buttons 122, door switches 123, light curtains 124, safety blocks 125, and/or from clutch and brake valves 126.

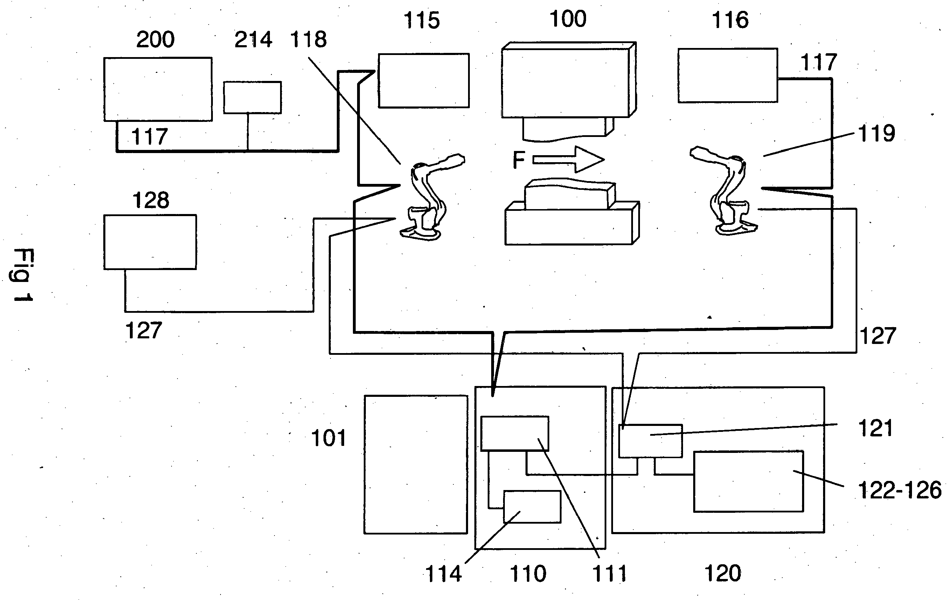

Figure 1 shows a schematic layout for an improved press line according to an embodiment of the invention. This layout or control topology places the press as an integral part in an automation system instead of as a device appended to an automation system.

Figure 1 shows a simple press line, a simple cell comprising one improved mechanical press 100. The press 100 is arranged with a drive 101 (or electrical drive controller 101) for the main electric drive motor of the press. The motions of the press are controlled by a press controller 110 as in the prior art of Figure 2. However, at a higher level of a control hierarchy according to an embodiment of the invention the motions of the press 100 are also controlled by an automation controller 200, which may be a PLC. The automation controller 200 is connected by a control fieldbus 117 to a first loading device 118, to a press controller 110, and to a second loading or unloading device 119. The automation controller 200 may be arranged with a loading HMI 115 to control, program and/or monitor the press loading operations and/or with an unloading HMI 116 to control, program and/or monitor the press loading/unloading operations. Automation controller 200 may also be arranged with an HMI 214 for control, programming and/or monitoring of the press line.

Figure 1 also shows a separate Automation safety controller 128, which may be a PLC. The automation safety controller 128 is connected by a safety fieldbus 127 to the press safety controller 120, and thus to safety control PLC 121, as well as to two loading devices 118, 119. In this exemplary view, a robot 118 is shown to be a loading device and a second robot 119 operates as an unloading device. Workflow direction is from left to right as indicated by arrow F. As the figure shows, all the safety functions of the press line are controlled by one controller, the automation safety controller 128. The press controller 110 may be connected in the same way as for the Prior Art to a separate press safety controller 120, to stop press motion if an unsafe situation is detected by an open switch or by an alarm or by emergency button being pressed. Press controller 110 may be arranged with a press HMI 114, a graphic user interface for example, for control and/or monitoring of the press motion. Controllers such as the press controller 111 may be a PLC or may be any suitable industrial controller, or industrial PC, or a ruggedised PC or industrial processor, or similar.

An important aspect of the layout or control topology of Figure 1 is that the automation control PLC 200 is connected by the control fieldbus 117 to press control PLC 111. It is also connected to controllers (not shown) of the loading/unloading devices, the robots 118, 119. In this control topology, any control object controlled by automation controller 200 may be arranged for control as a slave of any other device. Thus at any point in a press cycle the press 100 may be controlled as a slave to the loading robot 118, or vice versa, the unloading device 119 may be controlled as a slave to the press 100, or vice versa. For example the timing of control signals according to an embodiment of the invention may be arranged in any given press cycle according to when the different devices reach the following positions:
- press reaches unload position; then
- unloader robot moves to unload a workpiece; when clear then
- loader robot moves to a new workpiece; when leaving the press then:

- press passes die-protect position and runs a new press cycle.

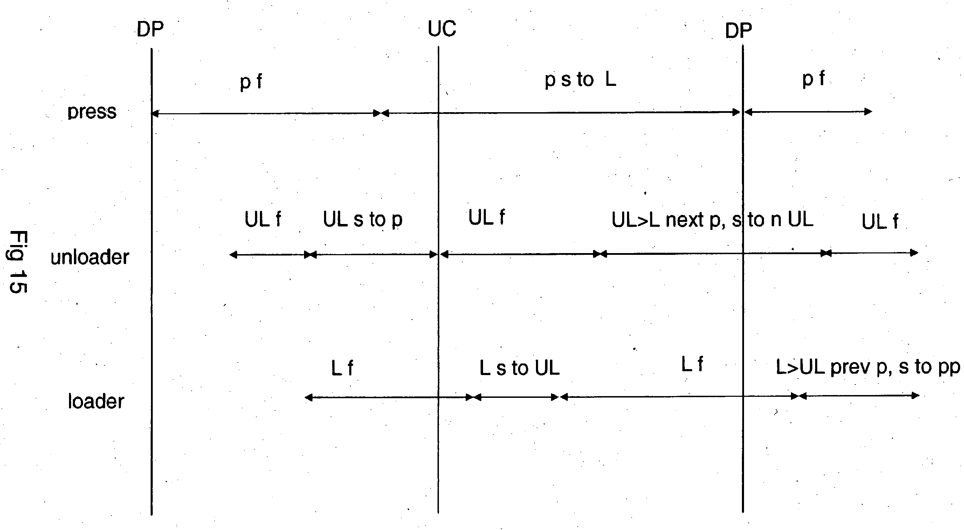

Figure 15 shows a schematic for synchronisation in which one first device is either working as a slave to another device, slave state, or else working in a "free" state where the device is not a slave to another device. Thus on the upper level for a press, the diagram shows that the press may change its synchronisation state during the cycle from
- press free (pf) changing just before Unload cam (UC) to
- press synch to loader (p s to L) up to Die Protect (DP), then
- press free (pf) ...

Synchronisation state for an unloader device or robot on the middle level is shown then
- after DP set to unloader free (UL f)
- approaching UC set to unloader synch to press (UL s to p)
- after UC set to unloader free (UL f)
- before approaching DP unloader switches role to loader for next press, and synchs to unloader of next press (UL>L next p, s to n UL),
- after DP set to unloader free (UL f). Synchronisation state for a loader device or robot on the lowest level is shown then to be
- approaching UC set to loader free (L f)
- after UC set to loader synch to unloader (L s to UL)
- after unloader begins to exit the press, set loader to loader free (L f), and
- after DP loader switches role to unloader for previous press, and synchs to previous press (L>UL prev p, s to pp).
In these synchronisation modes, the press or a device such as load/unloader may have only a status of slave or free.

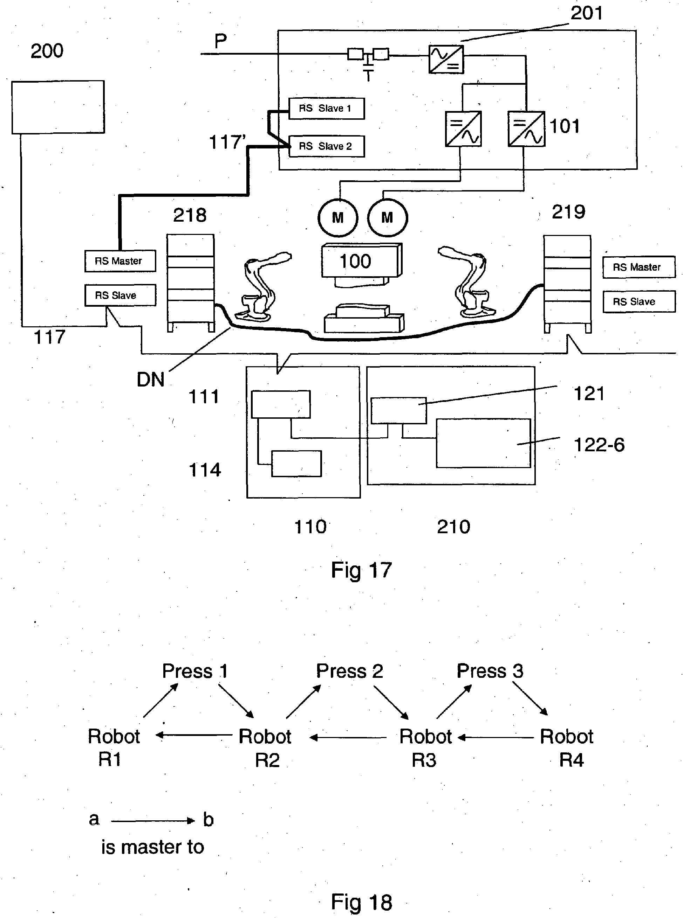

Figure 18 shows a synchronisation scheme in which a press or other device or robot may be a master and/or a slave. The figure shows, left, that Robot R1 may be master to the press 1, ie R1 is operating as a loader and the press 1 synchronises to R1. In a subsequent or other or overlapping part of the cycle Press 1 is master to robot R2, which is acting as an unloader to press 1. Unloader motion is governed for this part of the cycle by the progress of the press 1. Robot R2 may also be a loader to Press 2. In this case, second "triangle", robot R2 is master to press 2 while loading press 2. Press 2 then in turn becomes master to its unloader, robot R3. At the beginning of the above press cycle, loader robot 1 operates as a slave to unloader robot R2, only fully entering the press when unloader robot R2 begins to leave the press. Thus during one part of a cycle a press or other device may have the synchronisation status of a master and during another (or same or overlapping) part of the cycle it may have the synchronisation status of a slave. It is also shown that a device such as robot R1, R2 etc may have more than one role and function as an unloader to one press in one part of the cycle and as a loader for another part of the cycle. This method in which a robot or the press may be driven as slave in one part of a press cycle and run free or drive as a master in another part of the same press cycle is also described below in relation to Figure 17, an embodiment in which robot control units comprise synchronisation functions.
Another important aspect according to the invention is the use of an improved mechanical press capable of a variable press cycle, such as the servo press disclosed in US 60/765183 and/or the hybrid press disclosed in WO/SE2006/050055. Such presses may be driven at speeds which may be variably controlled and therefore be controlled so as to synchronise press movement with movement of other devices. Traditional mechanical presses with a flywheel and a clutch have a fixed movement cycle once the clutch is engaged and the movement for a press cycle begins. An improved press line with more degrees of freedom available for optimization to quality requirements and/or production and/or energy use constraints is thus achieved by combining the improved press control topology described above in relation to Figure 1 and applying it to a variable speed press.

Typically synchronization between two robots is achieved by continuously adapting the motion of the "slave" robot to the motion of the "master" robot. Thus, if at any instant the motion of the master robot is for some reason delayed, this delay is immediately mirrored in the motion of the slave robot. In the same way, if the master at any instant is accelerated, this deviation is also mimicked by the slave. This type of synchronization works properly in case the motion of the master is relatively smooth, i.e. the slave receives a motion reference without much noise or variations around a desired average. Another condition for this to work is that the slave should have sufficient power available in relation to its mass or inertia so that it is capable of following the motion of the master. This is usually the case when master and slave are similar machines with similar motion capabilities.

The case of synchronization of the press to the loader robot is more challenging in that the press drive has only limited power available compared to the press inertia. It may be that during the part of the press cycle where the press is required to synchronize to the loader, it may be operating at full motor torque - first to slow down the press to a standstill, then possibly to reverse the press to a desired starting position of the next press cycle, and finally to accelerate the press from standstill up to a high speed. Between these parts of the motion at either full positive or negative motion torque, there may be short periods of press standstill or constant speed (zero torque), but in many cases the operation is using full torque to obtain the shortest possible press time (see for example T2 in Fig 8 (Prior Art), Fig 9). Furthermore, as long as the press is sufficiently opened for the unloader and loader robot to move freely inside the press, there may not be a need to adapt the motion of the press to the motion of the loader (or unloader). This is different from for example the loader-to-unloader synchronization, where continuous synchronization is needed for the loader to be as close as possible to the unloader during some time of the loading. Synchronization of the press to the loader should only ensure that at one instant in time (one position in the loader motion) the press is at a certain point DP.

In a motion profile where the press drive is using full torque, synchronization in the traditional way is not possible or desirable, for the following reason. The motion profile of the press is normally optimized for giving the shortest possible cycle time. For this, the press - in the part of the motion where it is not dependent on the loader robot - has to move at highest possible or allowable speed. Thus, at the point where the loader leaves the press, i.e. the point where synchronization of the press-to-robot stops, the press must already be at a very high speed. To reach this speed, the drive typically has to accelerate at full torque from a start position. Any attempt to slow down the press (for synchronization) in this part of the motion would negatively affect the duration of the press motion in the unsynchronized part of the cycle. Any attempt to accelerate the press even more, for synchronization, is likely to fail since the drive is already giving full torque.

The inventors have determined that the motion of the loader robot, and especially the last part of this motion, is very predictable. Regardless of the exact motion of the robot, it will be sufficiently well known more than e.g. one second in advance at what instant the loader robot will leave the press. This knowledge can be used to plan the motion of the press in advance, in such a way that not only the press reaches the desired point of synchronization at the same instant when the robot leaves the press, but also that the press reaches this point with a very high speed such that the shortest possible cycle time is obtained. Depending on how much time is left before reaching such a point of synchronization, the motion of the press can be adapted to reach the synchronization point in the optimal way by using any or a combination of any of the following methods:
- a change of torque, a change of speed;
- a pause (standstill for some time) in the motion at an appropriate point (position, time instant), such as
   - introduction of a pause at a point where there was no pause in the originally planned motion;
   - increase of the duration of a pause;
   - decrease of the duration of a pause;
- a change in a reversal in the motion, such as
   - introduction of a reversing part in a motion which originally had none (uni-directional pressing,
      changing from uni-directional motion to "alternative bi-directional" motion);
   - a change of the position or positions at which the press changes direction of rotation (applicable
      for both bi-directional motion and "alternative bi-directional" motion);
   - elimination of a reversing part;
- a change in a minimum speed point in a motion without zero-speed point (assuming a continuous press motion, where the press is slowed down to give time to the unloader and loader);
- earlier or later deceleration at the end of the press cycle.

Thus in an embodiment, the control hierarchy may be arranged as follows:
1: Unloader robot Slave of press; then
2: Loader Robot Slave of the Unloader Robot; then
3: Press Slave of Loader Robot;
where in the first level the time that the press will arrive at the Unload Cam position may be predicted with great accuracy for synchronisation. The third level in particular employs the capabilities for variable speed control of press motion available with a servo press or hybrid press of the types described above.

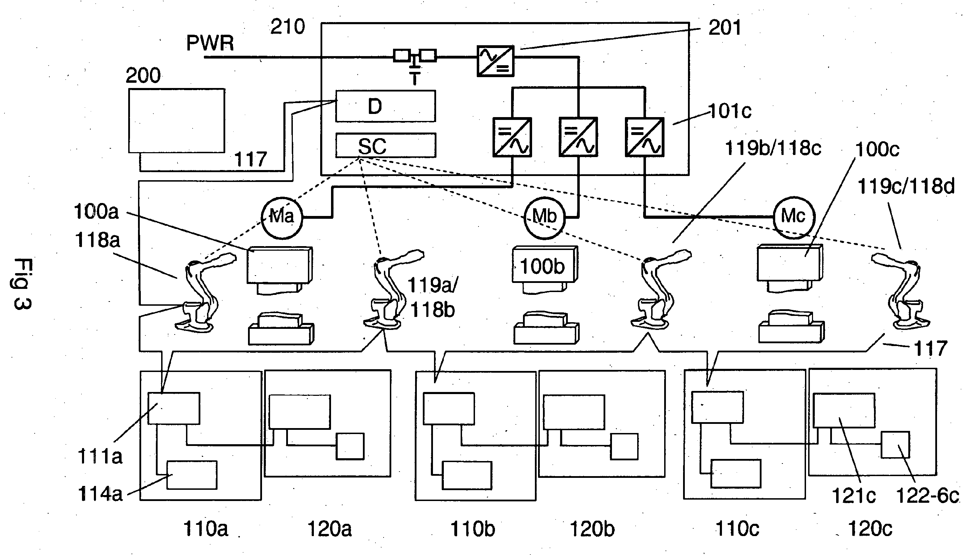

Figure 3 shows an improved press line according to another embodiment of the invention. Once again each device controller is connected to a control fieldbus 117 and subordinated to the automation controller PLC 200. The automation safety controller, press line HMI and safety fieldbus would be as shown in Figure 1, but they have been omitted from Figure 3 in order to simplify the diagram. Automation controller PLC 200 is shown arranged to control three presses, 100a-c. Press 100a is arranged with a loader robot 118a and an unloader robot 119a. Unloader robot 119a may also function as a loader to second press 100b, in which case it may be denoted 119a/118b to indicate this possibility of more than one function. Press 100a is arranged as before with a press controller 110a and a safety controller 120a, which would be connected to a safety fieldbus (not shown) as shown in Figure 1.

An improved electrical drive controller configuration 210 is shown. The three drive motors Ma-c of presses 100a-c are shown each supplied by a drive device, such as drive 101c. In this example this electrical drive device is a converter which may supply power to the motor in a controlled way. With this improvement, all three converters are supplied by one rectifier 201, a single power device such as an inverter, which supplies power to one or more motors each driving one of a plurality of presses. A multi-drive may optionally include one or more inverters. Such a multi-drive 201 may optionally also supply power to other press line devices such as hydraulic pumps, cooling equipment, transfer equipment, turntables and so on. The power supply arrangement comprises a connection PWR to a power grid, and a power management device, arrangement or function. For example, a power limiter arrangement to limit the total power or peak power of the flywheel motor plus the auxiliary second motor. Associated with the control function of the power supply arrangement is a unit or function D for processing die information and a unit or function SC for synchronizing robot movements. Unit or function D is also connected to the automation control PLC 200, for example via control fieldbus 117. The die information processing functions D may also be comprised in the automation controller PLC 200, or may be distributed in some other way, similar to the way that the SC functions may be distributed.

The function of synchronisation calculations (SC) for the devices, robots and press movements may be comprised in an independent unit as indicated SC in the diagram. The synchronisation calculations and algorithms for synchronisation function may optionally be included in one or more of the robot control units for controlling robots 118, 119 etc, (see embodiment of Figure 17 below) or included in one of the drives 101a-c, or in a multi-drive 210. This function may also be distributed in the system in some way. The synchronisation calculation function SC typically uses position information from the press or presses, the robots and other device as necessary to calculate synchronisation data for synch to motion operations as well as synch to point operations.

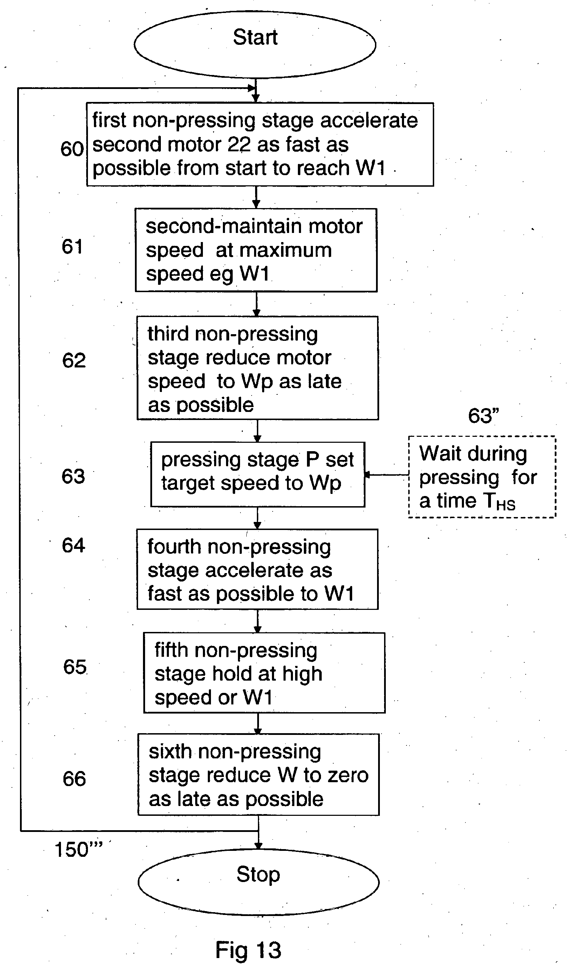

An improved press line such as the press line of Figure 3 may include one or more improved presses according to one or more embodiments of the invention. For example one or more presses may be included in a press line, where a plurality of presses operate on the same or related products. In the press line context some of the optimisation and coordination methods applicable to optimise press cycle for a single stand-alone press may be extended over the group of processes. Thus recovered energy for example may be consumed by other machines and not just one stand-alone improved press. Combined peak power of, or energy use by more than one machine may be optimised or coordinated, for example to reduce total peak power consumption or to reduce potentially disruptive peaking or spiking in power use. Such considerations for overall power use by a press line may also introduce constraints for acceleration, deceleration times etc that may be factored into a given press cycle or method such as that described in reference to Figures 7b-d. For example, to obtain the shortest possible time for a production cycle the press is accelerated such as in step 60 of Figure 13 as fast as possible; but the acceleration may be varied to less than maximum to avoid an instantaneous power peak for the press line as a whole. The first acceleration step 60, may not be linear, and may be arranged to match a time period, the amount of time need by a loader to insert the workpiece, and thus take at least a given time to reach the DP angle, rather than a maximum and/or straight line acceleration. Similarly, the regenerative braking that is normally carried out, such as in connection for example with steps 62, 66 of Fig 13, may be arranged with constraints to provide return energy to any of the same press, another machine, the press line or the grid.
Such coordination or optimisation between presses may be arranged around other aspects of the improved press. For example when optimising a press line the start/stop positions in each press cycle running on each press may be selected or adjusted. This allows greater freedom for arranging optimal overall production times for a press line.

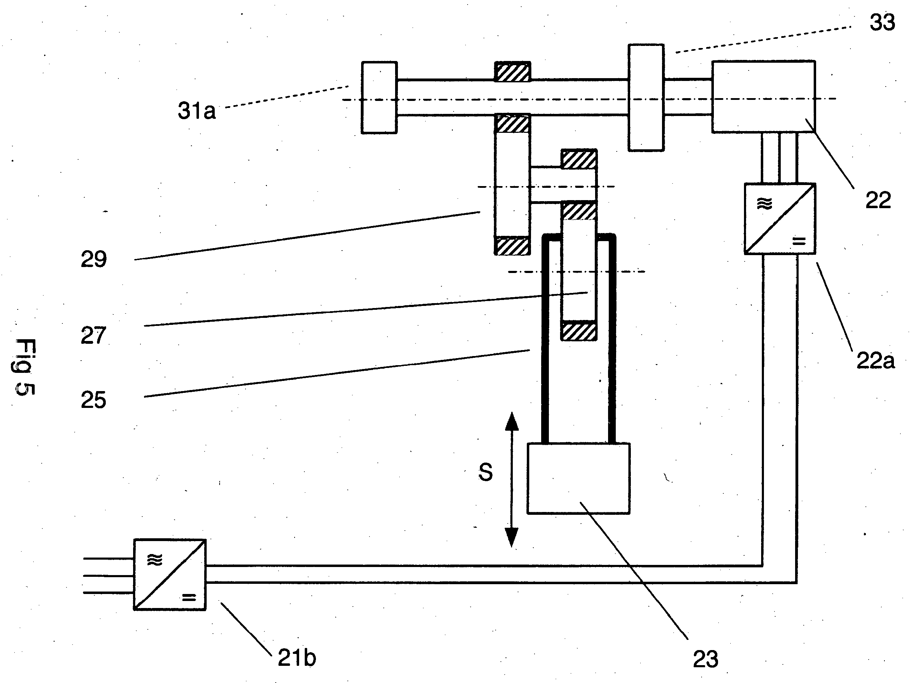

Figure 5 shows a schematic layout for an improved mechanical press according to an embodiment of the invention. It shows in a simplified way a press ram 23, an eccentric drive wheel 27, a press gear mechanism 29, and an electric drive motor 22. It also shows motor power supply and control means 22a and 21b. The figure shows press ram 23 which is driven in a up-and-down motion S by an eccentric drive wheel 27 or crank and a link 25. The eccentric drive wheel is in turn driven by a press gear mechanism 29 which is shown in a simplified cross section in which gear teeth are indicated by cross-hatching. The eccentric wheel is driven through the press gear mechanism by the drive motor 22. Drive motor 22 which may be a servo motor, is arranged with an inverter 22a and a rectifier 21b which are connected to a grid or power network (not shown). Other motor control means may be substituted. The Figure also shows an optional emergency brake 31a and an optional gearbox 33, either of which may be added to the press if so required. It should be observed that this embodiment does not usually comprise a flywheel and a clutch.

Figure 5 shows press ram 23 which is driven in a up-and-down motion S by an eccentric drive wheel 27 or crank and a link 25. Other mechanical transmissions are known, of which some are suitable for transmitting power from the motor and mechanically driving the slide. For example a ball-screw system for transferring rotary drive motion from a variable speed electric motor in the press into a linear motion of the press slide or ram. Similarly, certain double link and or knuckle mechanisms may also be substituted for an eccentric mechanism.

The drive motor may have an AC supply as shown or a DC supply. The motor speed control means may be a frequency converter, an inverter/rectifier as shown or other motor speed control means. The embodiment shown has a relatively large drive motor. Alternatively a smaller motor is used and arranged in a configuration that comprises extra inertia. The extra inertia may be in the form of a small constantly connected flywheel, or a motor which has high inertia, or a high inertia gearbox 33 or other mechanical means. The extra inertia may also be variable or detachable in some way.

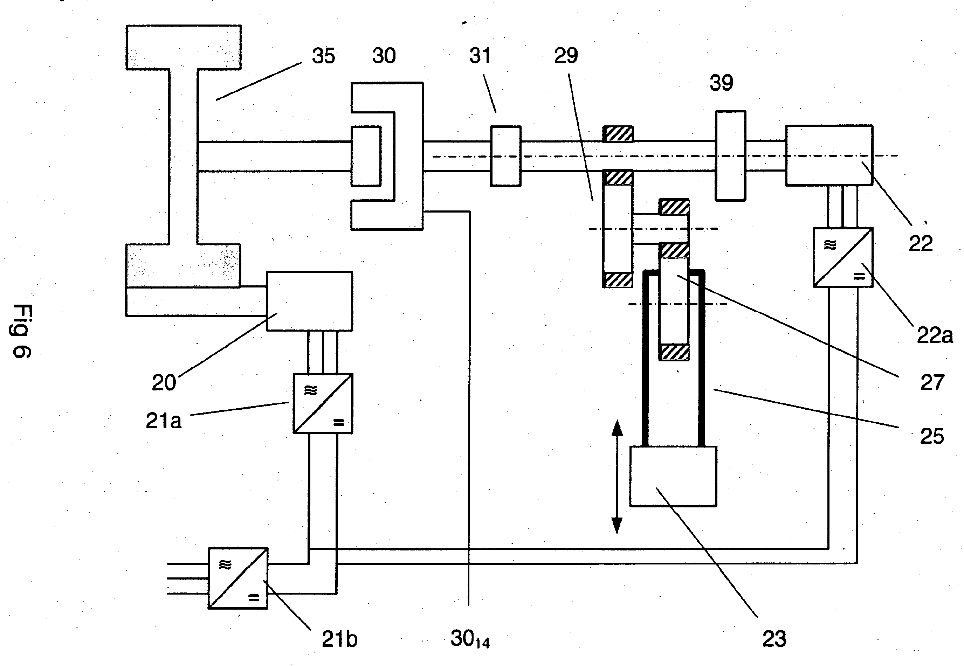

Figure 6 shows an improved press of the hybrid type as described in WO/SE2006/050055. It comprises at least one second drive motor 22, in addition to a first drive motor 20 for driving the flywheel 35 of the press. In this example one rectifier 21b supplies at least two inverters 21a, 22a which power the flywheel drive motor 20 and the auxiliary second drive motor 22 respectively. This arrangement has the advantage of lower losses than topologies in which power is passed form one rectifier to another rectifier before being consumed by a motor. Instead power goes from one motor to another through the shared DC link between rectifier 21b and inverters 21a, 22a. An optional gear box 39 is indicated, as well as an optional emergency brake 31.

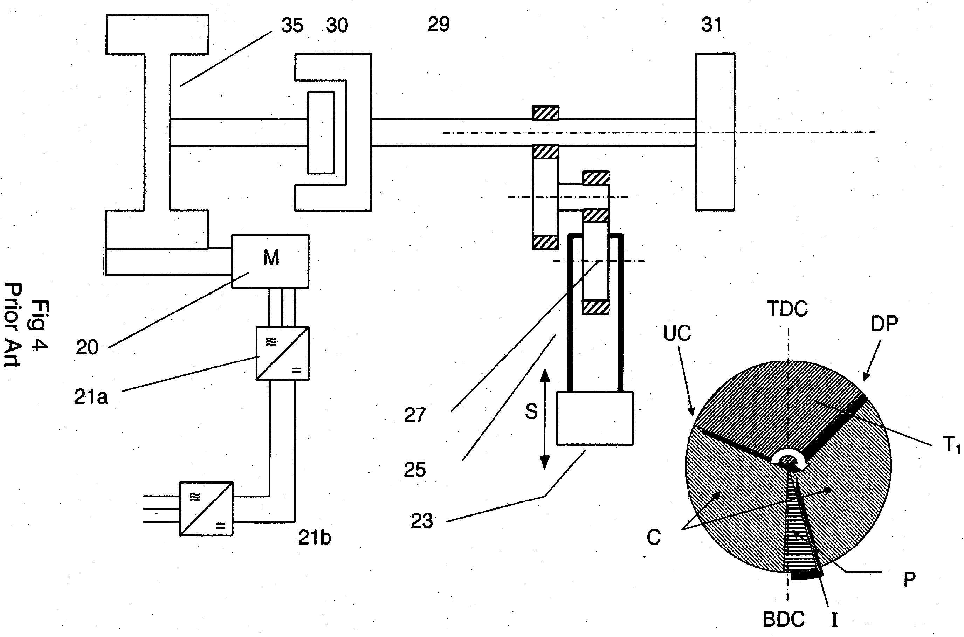

Figure 4 Prior Art is discussed briefly as a traditional mechanical press. Figure 4 also shows a schematic diagram for a traditional press cycle according to the Prior Art. Press cycle normally starts at Top Dead Centre or TDC and moves, eg clockwise. As the press begins to close in the pre-pressing stage there comes a point after which the press has closed to an extent that there is no longer sufficient clearance to load in a workpiece without damaging the press die or the loader. This point, as measured in terms of crank angle, is called Die Protect or the die protection angle, DP. (The point may otherwise be referenced in other terms such as of position in the press stroke, the linear distance from TDC or BDC between the ram and the die etc.) The press cycle continues towards 180 degrees and Bottom Dead Centre BDC. The workpiece is impacted, point I, and pressed or stamped, punched, deep drawn etc during pressing stage P. The cycle continues clockwise past Bottom Dead Center BDC and the press opens and reaches a point UC, Unload Cam. The unload cam angle (UC) is used here to mean the limiting point or time when the die is opened sufficiently to withdraw and unload the part after forming. Both the die protection angle and the unload cam angle may vary to some extent between production of different articles, typically dependent both on the blank used and on the depth to which the blank is drawn down over a die, and the length of the press stroke.

It may be seen from the cycle diagram in Figure 4 that access to the press for the purpose of unloading processed workpieces or loading new blanks, workpieces, is during the time T₁ between UC and DP. This time is limited, even though the press may be stopped between cycles, and is normally planned to be as short as possible. The time available for unloading/loading is limited by the periods C between DP and P and again between pressing P and UC. All the points DP, P, UC in the traditional press cycle are fixed.

Figure 9 shows other aspects of the improved press production cycle, which are concerned with loading a blank or workpiece into the press and subsequently removing the workpiece after the pressing (stamping, punching etc) stage. At the start of the press cycle the press is open and a blank may be loaded. When the press begins to close in the pre-pressing stage there comes a point called here the die protection angle, DP. Correspondingly, there is also a point in a non-pressing stage following the pressing stage after which the press has opened sufficiently that the workpiece may be removed without damage to the workpiece or the die. This point, as measured in terms of crank angle, is called the Unload Cam angle. Unload cam angle (UC) is used here to mean the limiting point or time when the die is opening and has opened sufficiently to withdraw and unload the workpiece after forming. Both the die protection angle and the unload cam angle may vary to some extent between production of different articles, typically dependent both on the blank or workpiece used and on the depth to which the workpiece is drawn down over a die.

Thus in Figure 9, the stages of the press cycle shown comprise pre-pressing stages, a pressing stage, and post-pressing stages. The press cycle may be described thus:
o a first non-pressing stage, normally accelerate so that maximum press speed W1 is reached as soon as possible, or when synchronising, accelerate to as fast a speed as possible at DP but synchronised to the arrival of the unloader, and after DP accelerate to W1;
o a second stage hold at maximium press speed of W1;
o third non-pressing stage reduce to Wp as late as possible;
o a pressing stage with target speed for pressing of eg Wp
o within the pressing stage target speed Wp may be reduced and/or held at a standstill according to specific stamping/drawing/pressing techniques;
o fourth non-pressing stage accelerate as fast as possible (normally) to W1;
o fifth non-pressing stage hold at high speed eg W1;
o when synchronising decelerate to UC eg with press as slave to unloader device or robot;
o sixth non-pressing stage reduce speed to zero as late as possible, and so that press stops at required position.

The improved press cycle provided by the improved control method allows the total time for a production cycle to be shorter than the production cycle time of a traditional mechanical press of the prior art by shortening the time taken to carry out non-pressing parts of the press cycle between DP and UC. In particular, the time period from the latest loading point DP to the earliest unloading point UC, denoted as T2, may be shortened by means of running the drive motor at increased speeds such as W1 to drive the eccentric at speeds greater than the pressing speed Wp and then reducing to eccentric speed Wp or, at the cycle end, reducing to zero. This is indicated schematically on the diagram by the difference in time for T2, ΔT2 in the speed profile of Fig 9 as compared to Figure 8 (Prior Art). Although the improved press cycle is mainly described in terms of a cycle or of separate cycles it may be applied to Single Stroke operation and/or to Continuous operation. In the latter case the press does not stop at all between production cycles.

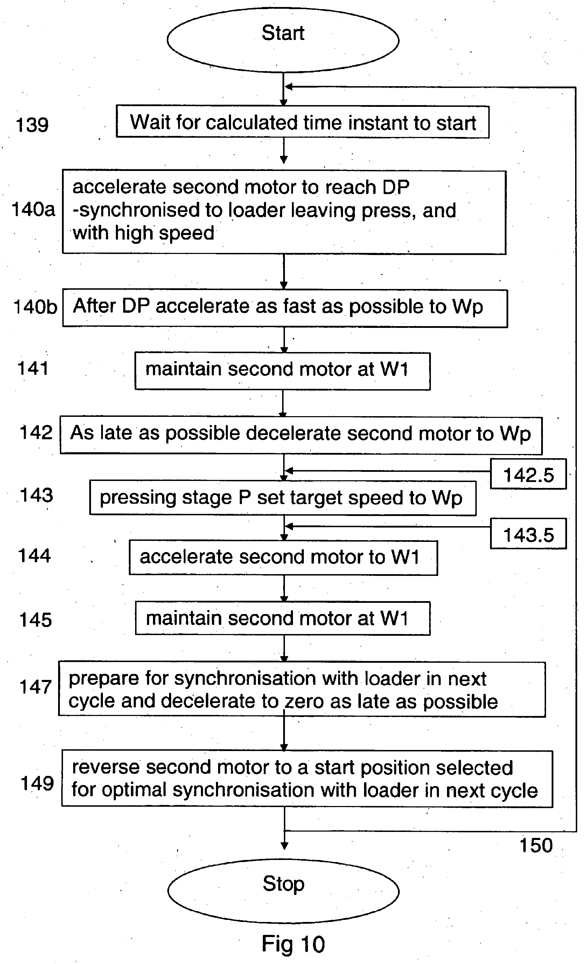

Figure 10 is a flowchart for a method to operate the improved press line comprising a hybrid mechanical press, comprising at least one second drive motor, according to a preferred embodiment of the invention. The method shows the press cycle to comprise a pressing stage and a plurality of non-pressing stages. The method may further be described as comprising pre-pressing stages, a pressing stage, and post-pressing stages and in this case is an embodiment with a reverse motion at the end of the press cycle. The flowchart comprises the following blocks for controlling the press of the improved press line:
139 Press waits for a calculated time instant based on synchronisation before starting;
140a Accelerate press as fast as possible synchronised eg to the unloader and so as to reach DP at a high speed;
140b After DP accelerate to maximum speed W1 as fast as possible; 141 Maintain W1;
142 As late as possible decelerate second motor to pressing speed Wp;
142.5 engage clutch between flywheel and eccentric, with position/speed synchronisation or not;
143 During pressing stage P set target speed to Wp, unless variations required for pressing/stamping process, eg hold under pressure for a time T_{HS;}
143.5 dis-engage clutch between flywheel and eccentric
144 Acccelerate second motor to W1;
145 Maintain second motor at W1 as long as possible;
147 Prepare for synchronisation with loader in next cycle;
148 Reverse second motor to a start position selected for optimal synchronisation with loader in next cycle.
150 Loop back to 139 (or else Stop)

Thus when a hybrid type press is present in the press line, a press comprising a second drive motor as well as a first (flywheel) drive motor, synchronisation may be carried out in which the first motor (20) is not always mechanically coupled to said press and where the second motor (22) is always mechanically coupled to said press.

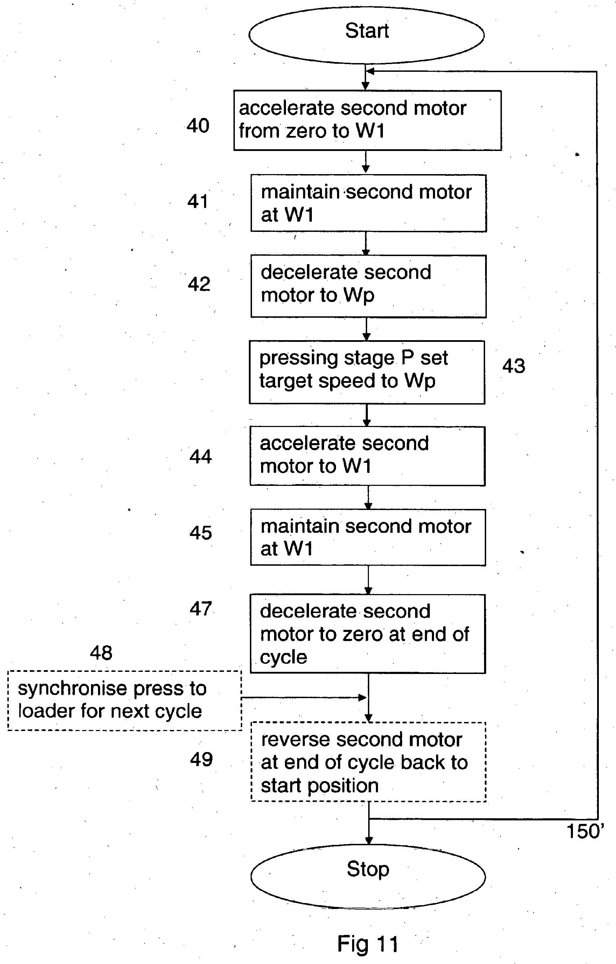

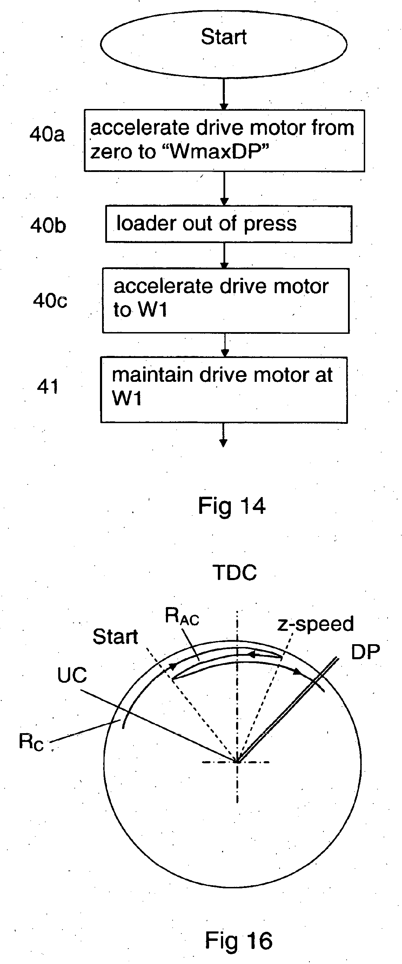

Figure 11 shows a control method of the press in the press line when the press is reversed for some distance at the end of a cycle, before the beginning of the next press cycle. See also diagram of Figure 16 which shows a first (clockwise) rotation direction R_{c} and a second (anti-clockwise) rotation R_{AC}. An advantage of this type of alterative bi-directional cycle is that it allows for a longer acceleration phase up to Die Protect. Thus steps 40 to 47 are similar to steps 137-149 of Figure 10.

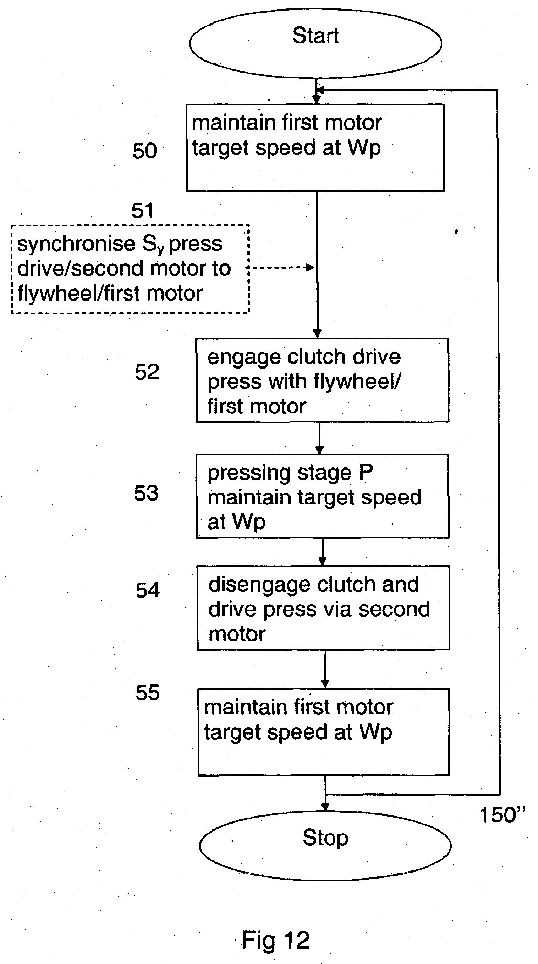

Figure 12 shows a control method featuring the first motor 20, the flywheel motor of a hybrid press in the press line. It shows a block 51 where the second motor of the press may be synchronised to the first motor 20, flywheel motor if required before engaging the clutch 52 for the Pressing stage, P. It also shows how following the pressing stage, at 54, the flywheel may be disengaged by the clutch so that the press can be driven faster than Wp.

Figure 13 describes a control method of the press in the press line when synchronisation is not used. The method begins with:
60 accelerate, eg as fast as possible, from start up to W1;
61 maintain motor speed at maximum speed of W1;
62 reduce motor speed from W1 to pressing speed Wp as late as possible;
63 set motor target speed such as Wp for pressing stage P or to variable pressing speeds (eg 63") according to the required drawing/stamping/bending/pressing process;
64 fourth non-pressing stage accelerate eg as fast as possible to W1;
65 fifth non-pressing stage maintain motor speed at a maximum speed such as long as possible;
66 sixth non-pressing stage reduce to zero.

This method may be applied to the improved servo-type press as well as a hybrid type. It should be noted that if the pressing speed is to be reduced during pressing, or the press held at a standstill under pressure during the pressing stage P then the clutch must be dis-engaged to de-couple the flywheel from the eccentric in the case of the hybrid press.

One of more drive motors may be controlled to run at high speeds during a part of a press cycle by means of a control method known as field weakening.

This method comprises steps to control the improved press so as to achieve a total production cycle which takes as little time as possible. Other constraints may be included or conditionally included in the above method for controlling a press line, for example to coordinate or synchronise with loading/unloading requirements for the press and/or to optimise peak power and/or energy consumption for this press. This peak power and/or energy consumption may for example be optimised with regard to acceleration and regenerative braking during speed reduction periods.

Figure 13 also shows a variation of the method described in relation to the flowchart of Figures 10 and 11. In certain operations, for example in hot stamping, it is desirable for the press to stop during the pressing stage, 63" and hold the workpiece under applied pressure for a period of time, indicated as T_{HS}. This standstill is normally carried out at the position of BDC, or thereabouts. It is a simple task to include one or more additional functional steps for control of the improved press according to one or more embodiments.

Figure 14 shows a flowchart for synchronising the press to the motion of a loader device or loader robot. The drive motor referred to may be a single drive motor 20, or a second or hybrid motor 22. The figure shows the press cycle beginning with block:
40a accelerate toward WmaxDP, the maximum speed the press can reach by the time that the loader will have left the press at a point in time before or at DP;
40b receive signal that the loader device or robot is out of the press;
40c accelerate to maximum velocity W1;
41 maintain drive motor at W1.
The time when the loader will be out of the press is predictable. The control unit calculates a maximum acceleration for the drive motor in the period of time up to loader out, at or just before DP. The drive motor is thus accelerating but will not close the press before the predicted time.

Electrical energy consumption of the drive motor of a press may be improved or smoothed by use of regenerative braking. The motor may be decelerated to a reduced speed or to a zero speed by means in part of regenerative braking. For example a motor speed reduction during the first pre-pressing stage from W1 to Wp, and a motor speed reduction after pressing from W1 to zero. A system comprising an improved press according an embodiment of the invention may comprise energy recovery means for recovering energy from the motor, for example during deceleration or braking. Energy recovery may also be arranged to take place during any other reduction in kinetic energy of the system, or part of, such as during variation in inertia of a press system. The energy recovery means may be any recovery means such as for example electrical, mechanical or chemical. For example in Figure 3 an energy management device/system 210 is indicated which may comprise a combination of functions and/or devices. Energy recovery and management may involve use of one or more capacitors, batteries, mechanical device such as flywheels, mechanical springs or devices comprising a reservoir of a compressible fluid. For example, energy stored in the flywheel of a press may be used in energy optimisation methods by a drive motor 20 or 22 of another press, or to reduce power consumption by the second motor 22 during a part of a press cycle.

The stored energy is principally reused during one or more of the following periods of the press cycle: initial acceleration at start of the press cycle; pressing; reacceleration after pressing. Recovered energy may also or instead be fed back to the supply grid. Figure 3 shows one rectifier supplying three inverters which each power the drive motor Ma-c of the three presses shown 100a-c. This arrangement has the advantage of lower losses than topologies in which power is passed form one rectifier to another rectifier before being consumed by a motor. Instead power goes from one motor to another through the shared DC link between rectifier 201 and inverters 101a-c of presses 100a-c.

In for example the automobile industry typical production volumes mean that the energy optimisation features of the improved press line may be very beneficial in, for example, reducing energy consumption. However the improved press line may also be used in other stamping, cutting, blanking, notching, pressing or deep drawing applications where mechanical presses are to be found, and even some application where hydraulic presses are used, such applications as in production of household appliances or white goods, of industrial shelving, metal cladding panels, metal cabinets and metal furniture, and for blanking coins or minting coins.

As well as offering an improved press line for presses used for forming, bending, stamping, punching, deep-drawing etc metal parts, a press line comprising the features of one or more embodiments of the invention may also be used to form parts from plastic materials. An improved press line comprising one or more improved mechanical presses as previously described may also be arranged suitable for moulding plastic materials, both thermoplastic and thermosetting plastics and/or polymer blends and composites. Thermoplastics allow the use of injection moulding, thermoforming, blow-moulding, extrusion, and other processing techniques. For example at least the press function parts, die holder and die clamping functions, of an injection moulding machine may be carried out by the mechanical press according to an embodiment of the invention. Thermoplastic forming presses may comprise a high-speed servo-controlled motors giving the press the ability to carry out a a rapid close at up to 1,000 ipm when moulding processing speeds are typically up to 100 ipm. The presses may be of moderate size of a few hundred tons up to 1500 tons pressure, or more.

Thermosetting plastics form chemical bonds between polymer molecules, also called crosslinking, or sometimes when applied to rubber materials, vulcanizing. Some thermosets can be further polymerized by adding heat. Materials such as phenolics and epoxies can be injected or transferred into or compressed within a hot mold. RIM-molded polyurethanes (Reaction Injection Moulding) require a controlled chemical reaction within the mould. Not only is a part made but the plastic material is also created as the mould is also a polymerization reaction vessel as components mix and react as they enter the mould. Polyurethane RIM processing can produce parts varying from a very flexible foam-core part to a rigid solid part. Part density can vary widely, too, with specific gravities ranging from 0.2 to 1.6. The process is widely used in the automobile industry for both interior parts such as instrument boards and also external parts such as hoods, fenders, bumpers. Hydraulic presses are often used for compression moulding. The present invention is very suitable because of the ease with which parameters of a press cycle may be changed to suit products which may vary according to the process requirements of the plastic material and the wall thicknesses of the part, and so on. For example to adjust dwell times, times of standstill with the die still under pressure is easily configured with the improved press. The presses may be arranged for heating or curing cycles ranging for several seconds up to more than an hour. Moulding dimensional tolerances are improved by the increased opportunity for precise speed/position control during the pressing process due to the servo control of the electric press motors. Press sizes for compression moulding may also be moderate in size, being from a few hundred tons up to 2000 tons, or more.

Such a plastic moulding press line may synchronise unloaders or other devices to the press. The press may also be synchronised to an unloader, trimmer, stacker or other device in a press line. Loading plastic materials into a die for moulding by means of robots will not be necessary for most plastic materials, but a robot or manipulator arm may be used to place inserts etc into a die before for plastic to be moulded around the insert. Removing moulded products and transferring them to a clipping, cleaning, sprue removing tool or similar process may be carried out by an unloader or robot unloader. Stacking moulded parts, or transferring to another process may also be carried out by a robot or other device.

According to another embodiment of the invention, the drive motor of the press is controlled to operate the press in an improved press cycle which extends over greater than 360 degrees crank angle or equivalent when expressed in terms of a press opening distance. A conventional mechanical press has a press cycle of up to 360 deg and typically begins and ends at Top Dead Centre (TDC).

Figure 7a shows a standard press cycle of the Prior Art. It shows a 360 degree cycle in one rotational direction. The cycle starts and stops at 0/360 degrees. Relative positions for DP and UC are schematically indicated.

Figure 7b shows a general embodiment. The position of T1, the period T1 between UC and DP, is indicated on Fig 7b. Figure 7c shows an embodiment in which the press operates bi-directionally. A clockwise cycle S_{C}, solid line, begins at Start 1 about 10 o' clock and continues clockwise to DP_{C} at about 2 o'clock, round till UC_{C} at about 10 o'clock and finishes at Stop 1 at about 2 o'clock. Depending on the process or product requirements start/stop positions may be closer to TDC than the positions shown in the figures, but rarely farther away than the UC angle. Similarly the press then rotates in a reverse direction, dashed line, beginning at Start 2 of about 2 o'clock and continuing anticlockwise to DP_{AC} at about 11 o'clock, continues round to UC_{Ac} at about 2 o'clock and finishes at Stop 2 at about 10 o'clock which is the same position as the Start 1 position for the clockwise rotation.

Figure 7d shows an alternative embodiment in which the press rotates in a first rotational direction through a press cycle greater than 360 degrees. At the end of the production cycle the press then reverses to the start position. This is the type of method which is flowcharted in Figure 10. Figure 7d shows a Start at about 10 o'clock which runs clockwise, solid line, to DP_{C} at about 1 o'clock, clockwise round to UC_{C} at about 10 o'clock, continuing to finish at Stop at about 2 o'clock. The press then reverses R_{AC} in an anticlockwise direction to the start position at around 10 o'clock. The start and stop position may be arranged symmetrically about TDC as shown in the above examples, or not; and the start and stop may also be placed closer to TDC then the figures schematically indicate. Start/stop is not usually placed further away from TDC than the UC angle or thereabouts.

According to another embodiment of the present invention an improvement is provided to methods for operating a mechanical press comprising an electric drive motor wherein the press is moved backwards between successive press production cycles operations instead of changing rotation direction of press operation for every alternate cycle. This embodiment is particularly advantageous for presses which, due to design or other reasons, cannot be driven in reverse for a complete press cycle.

According to another and preferred embodiment of the present invention an improvement is provided to methods for operating a mechanical press comprising an electric drive motor wherein the press is controlled in part by a robot control unit. Figure 17 shows a simple, single press example for a press line in which two robot control units also comprise control means for the press. Figure 17 shows a press 100 arranged with a robot 118 in a loader position and a second robot 119 in an unloader position. Robot 118 is controlled by a robot control unit 218, and robot 119 by control unit 219. A press 100 is shown, in this case with two drive motors, which may be considered to be 20, 22 as in Figure 6. The automation controller 200 is the supervisory controller for the press automation as in Figures 1, 3, and communicates via a fieldbus as before, in this case a Profibus 117 with press controller 110. In addition automation controller 200 communicates with each one robot control unit, 218 and 219. The two robot control units are connected by another fieldbus, which may be a Device Net DN connection as shown in this example. A robot controller synchronisation function RS master comprised in robot controller 218 is connected via Profibus line 117' to RS Slave 1 and RS Slave 2. Robot control unit 219 also comprises a RS master and a RS slave.

In this embodiment the calculations for synchronisation and for certain necessary speed references for the press are carried out in a robot control unit 218, 219. At least one robot control unit 218, 219, is arranged capable of controlling an axis that is external to the robot. Thus a robot controller during at least one part of a press cycle controls the press as though it were an additional axis of the robot. For example in the schema of Figure 17 a control scheme may comprise steps as follows:
a) control unit 218 calculates a path for robot 118 (as loader)
b) control unit 218 calculates values for W1,
c) control unit 218 sends speed references to press drive for first W1 speed part of the beginning of a press cycle, (see also Figure 9) which means the press speed is controlled so as to:
   (i) accelerate so that maximum press speed W1 is reached as soon as possible or when synchronising, accelerate to as fast a speed as possible at DP but synchronise to the arrival of the unloader, and
   (ii) after DP accelerate to W1
   (iii) maintain at W1 as long as possible.

It should also be noted that in the first stage (i) the press and the loader robot may be driven as slave to the unloader during a time when unloading takes place, then during a time when loading takes place, the press becomes slave to the loader.

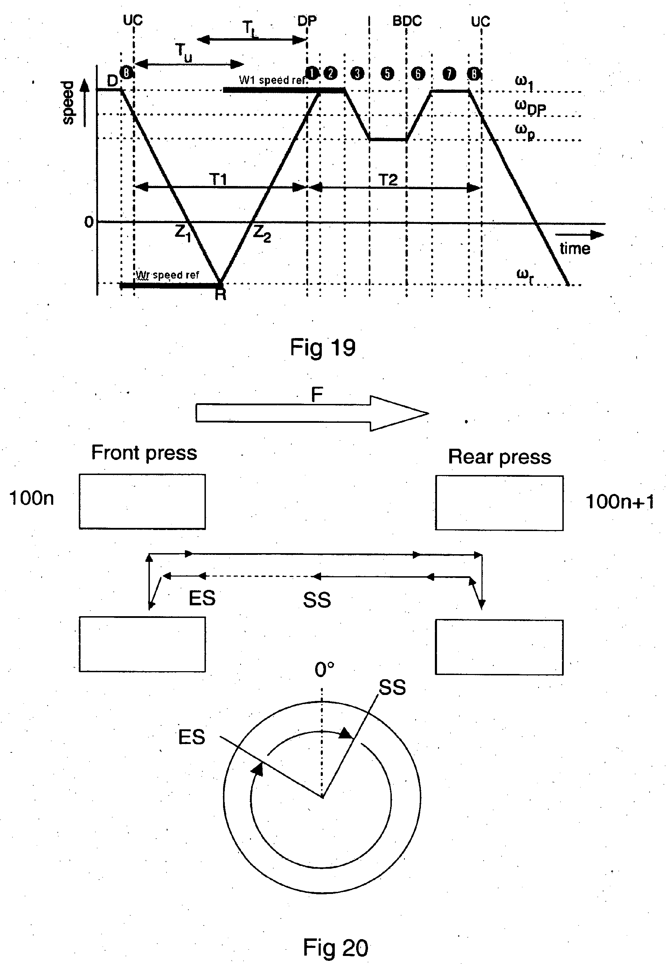

Figure 19 is a speed profile for a bi-directional press cycle of the improved press line according to another preferred embodiment. The figure shows one way to calculate set points for the motor speed W in a press cycle. In the press cycle shown, the motor passes through a zero point at Z₁ and reverses to a maximum negative speed Wr, then decelerates and passes through a zero point at Z₂. Setpoints may be calculated for max speed W1, speed at DP, W_{DP} and for speed during pressing Wp. These setpoints may be generated by a robot control unit that calculates and generates synchronisation control signals, such as control units 218, 219 of an arrangement shown in Figure 17.

Figure 20 shows a schematic diagram for robot synchronisation relative two presses 100n and 100n+1 during part of a press cycle with the improved press line. The diagram indicates with arrow F a workflow direction from left to right. Synchronised movement starts at SS and ends at ES. This shows an objective of one synchronisation strategy which is that the robot should reach the point to wait for the unloading just when the press passes through the position (Unload Cam UC) where it is possible to enter the press to unload it. In terms of the press cycle the circular part of the diagram shows a cycle synchronised movement SS begins at about 1 o' clock and ends at ES just before about 10 o'clock.

One or more microprocessors (or processors or computers) comprise a central processing unit CPU performing the steps of the methods according to one or more aspects of the invention, as described for example with reference to Figures 10-14. The method or methods are carried out with the aid of one or more computer programs, which are stored at least in part in memory accessible by the one or more processors. It is to be understood that the computer programs for carrying out methods according to the invention may also be run on one or more general purpose industrial microprocessors or computers instead of one or more specially adapted computers or processors.

The computer program comprises computer program code elements or software code portions that make the computer or processor perform the methods using equations, algorithms, data, stored values, calculations and the like for the methods previously described, for example in relation to Figures 10-14 and in relation to the speed profile of Fig 9; and to the methods described in relation to Figs 7c,d, and 16 in respect of driving the press in more than one rotational direction; and to Figures 15, 17 18 in respect of synchronisation. A part of the program may be stored in a processor as above, but also in a ROM, RAM, PROM, EPROM or EEPROM chip or similar or other suitable memory means. The or some of the programs in part or in whole may also be stored locally (or centrally) on, or in, other suitable computer readable medium such as a magnetic disk, CD-ROM or DVD disk, hard disk, magneto-optical memory storage means, in volatile memory, in flash memory, as firmware, or stored on a data server. Other known and suitable media, including removable memory media such as Sony memory stick (TM) and other removable flash memories, hard drives etc. may also be used. The program may also in part be supplied from a data network, including a public network such as the Internet. The computer programs described may also be arranged in part as a distributed application capable of running on several different computers or computer systems at more or less the same time.

## Claims

1. A method for operating a press line comprising at least one mechanical press with a variable speed electric drive motor (22), a ram (23), a mechanical means (27, 25) for operating said press, and comprising at least one other device for loading (118), unloading (119) or pressing (100), which said other device is any from the group of: a loader, an unloader, a robot, another press, and wherein the method comprises the step of:
- performing a synchronization during at least one pressing or non-pressing part of a press cycle, which synchronization comprises synchronizing a movement of said press to a movement or position of at least one said other device in said press line, **characterized by** controlling and varying the speed of said variable speed electric drive motor (22) in a continuous or dynamic or adaptive manner,
- synchronizing an unloader device or robot during at least one part of a press cycle as a slave to said press, and then synchronizing a loader device or robot as a slave to the unloader device or robot, and then synchronizing said press as a slave to the loader device or robot.

2. A method according to claim 1, further comprising controlling said other device during the at least one pressing or non-pressing a part of a press cycle and synchronizing the movement of the said other device to a movement or position of said press, or another device which may be another press in said press line.

3. A method according to claim 2, further comprising controlling said press and synchronizing a movement of said press or said other device during the at least one pressing or non-pressing part of a press cycle wherein said press and said another device are either slave to device or free.

4. A method according to claim 1, further comprising controlling said other device and synchronizing to a movement of a device which may be said press, another press or any other device in said line during a first part of a press cycle and synchronizing to a movement of a different device during a second part of the press cycle.

5. A method according to claim 1 or 2, further comprising controlling the said other device in order to synchronize to a movement or position of a device downstream of said other device in said press line during a first part of a press cycle and by controlling the movement of the said other device in order to synchronize it to a movement or position of a device upstream of said other device in said press line during a second part of the press cycle.

6. A method according to claim 1 or 2, further comprising controlling the said other device in order to operate as fast as possible during a first part of a press cycle and by controlling the movement of said press in order to operate the press as fast as possible in a second part of the press cycle.

7. A method according to claim 1 or 5, further comprising calculating a prediction of when a device (100, 118, 119) will reach a certain point in a part of the press cycle.

8. A method according to claim 7, further comprising supplying the prediction to another device or to a controller.

9. A method according to claim 1, wherein the said other device is at least one loader device or at least one robot arranged to load said press.

10. A method according to claim 1, wherein the said other device is at least one unloader device or at least one robot arranged to unload said press.

11. A method according to claim 9 or 10, wherein the loader or unloader device or robot arranged to load, respective unload said press is also arranged as an unloader, respective loader of another press.

12. A method according to claim 9 or 10, wherein the loader and/or unloader device is arranged as two devices or robots working together to load and/or unload as a pair.

13. A method according to claim 12, wherein the first one of the two devices or robots working together is controlled synchronised as a slave to the second device or robot of the pair.

14. A method according to claim 1 or any previous claim, wherein a robot control unit (218, 219) calculates a path for a robot (118, 119), and calculates a motion or position for a press and sends control values for synchronised movement to a control unit (110) or drive unit (111) of a press (100).

15. A method according to claim 1 or any previous claim, wherein a robot control unit (218, 219) calculates a path for a robot (118, 119), and calculates motion setpoint values for a press and sends torque and/or speed and/or position setpoint values to a control unit (110) or drive unit (111) of a press (100).

16. A method according to any of claims 1 or 14 or 15, further comprising controlling the speed of a said electric drive motor (22) in order to optimise at least one press cycle of said press.

17. A method according to any of claims 1-16, further comprising controlling the speed of a said electric drive motor and optimising the said press line dependent on parameters from the group of: a state of a downstream process; a state of an upstream process; overall power or energy consumption; smoothing of power consumption peaks.

18. A method according to any of claims 1 or 17, further comprising controlling the speed of a said electric drive motor (22) during at least one part of a press cycle to wait or operate more slowly or with reduced power demand or energy consumption while keeping within a target time for the press cycle as a whole.

19. A method according to any of claims 1-18, wherein the speed (W) of a said electric drive motor (22) during the at least one pressing or non-pressing part of a press cycle of said press is controlled to vary and is greater than the speed of said drive motor (Wp) during a pressing part of the press cycle.

20. A method according to claim 1, wherein said press cycle may be carried out in a first rotation direction of a production cycle and extend over more than 360 degrees of crank angle or eccentric (27) rotation.

21. A method according to claim 20, wherein a said press cycle carried out in said first rotation direction (S_{c}) comprises a step of reversing said drive motor at the end of each complete press cycle and operating in a second rotational direction (S_{AC}).

22. A method according to claim 1, wherein the speed of said drive motor is maintained at a high or maximum speed (W1) greater than the motor speed during pressing (Wp) for a period of time.

23. Amethod according to claim 22, wherein the speed of said drive motor is reduced from a pressing speed (Wp) and may approach a zero speed for a period of time during the pressing part of said press cycle.

24. Amethod according to claim 23, comprising providing a control output to a drive control means of the electric drive motor wherein said motor is decelerated and the press maintained at a standstill upon reaching BDC, or thereabouts, for a period of time (T_{HS}).

25. A method according to claim 1 or 21, comprising providing a control output to a drive control means of the electric drive motor to move said ram to a cycle start position for each press cycle which is a plurality of degrees of crank angle backwards in a second rotation direction (R_{AC}) from the previous prior press cycle stop position or zero-speed position.

26. A method according to claim 21, wherein said press reverses from the first rotation direction (R_{C}) to the second rotation direction (R_{AC}) over a plurality of degrees between the stop (stop1) of a first press cycle and the start (start2) of a second press cycle.

27. A method according to claim 1, wherein said motor is controlled such that said motor rotational motion reverses direction from a first rotation direction (C) to a second and opposite rotation direction (AC) between each successive and complete press cycle.

28. A method according to any of claims 1-27, wherein said motor is decelerated to a reduced speed or a zero speed by means in part of regenerative braking.

29. A method according to claim 1, wherein the drive motor speed is variably controlled to slow the press down upon reaching Unload Cam (UC) or thereabouts for a period of time for synchronization purposes and re-accelerate the press before reaching a Die Protect (DP) position or thereabouts of the next press cycle.

30. A method according to any previous claim, wherein said press line includes at least one press which further comprises an additional drive motor (20) comprising a flywheel (35).

31. A method according to claim 30, wherein the speed or position of the variable speed electric drive motor (22) is controlled to synchronize to a speed or position of the flywheel (35) or the additional drive motor (20) of said press prior to and/or while engaging a clutch (30) of said press.

32. A method according to claim 31, wherein the clutch operation is synchronised to a movement or position of said press or to the variable speed electric drive motor (22) of said press.

33. A method according to claim 31, wherein the additional flywheel drive motor (20) is controlled to optimise or minimise for said press or said press line any from the group of: peak power consumption, energy consumption, cycle time, any combination.

34. A system comprising a press line including at least one mechanical press with a variable speed electric drive motor (22), a ram (23), a mechanical means (27, 25) for operating said press, and at least one other device for loading (118), unloading (119) or pressing (120), which said other device is any from the group of: a loader, an unloader, a robot, another press, **characterised in that** said press of said system is arranged so that, during at least one pressing or non-pressing part of a press cycle, the press enters a synchronization state in which the speed (W) of said drive motor may be varied and the speed of said drive motor is controlled in a continuous or dynamic or adaptive manner, such that a movement of said press is synchronized to a movement or position of at least one said other device in said press line, and an unloader device or robot is synchronized during at least one part of a press cycle as a slave to said press, and then a loader device or robot is synchronized as a slave to the unloader device or robot, and then said press is synchronized as a slave to the loader device or robot.

35. A system according to claim 34, comprising means for controlling said other device during a first part of a press cycle and synchronizing the movement of the said other device to a movement or position of said press, or another device which may be another press in said press line.

36. A system according to claim 34, wherein a loader or loader robot is the at least one other said device and said press is controlled to synchronize to a movement of the loader or loader robot during a first part of a press cycle.

37. A system according to claim 34 or 36, further comprising means for controlling said other device and synchronizing to a movement or position of a device which may be said press, another press or any other device in said press line during a first part of a press cycle and controlling the movement of said press and synchronizing to a movement or position of a different device during a second part of the press cycle.

38. A system according to claim 34, further comprising controlling the said other device in order to synchronize to a movement or position of a downstream device which may be said press, another press or any other device in said press line during a first part of a press cycle and by controlling the movement of the said other device in order to synchronize it to a movement or position of a different device upstream of said other device during a second part of the press cycle.

39. A system according to claim 34, further comprising means for controlling one first device in said press line synchronised to a second device in said press line by a method of constant motion following, such as for first and second devices being a first and second robot (118, 119).

40. A system according to claim 34, further comprising means for controlling one first device in said press line synchronised to a second device in said press line by a method of synchronising to a point or position, for devices such as a press (100a-c) and a robot (118, 119).

41. A system according to claim 34, further comprising means for calculating a prediction of when a device (100, 118, 119) will reach a certain point in a part of the press cycle.

42. A system according to claim 41, further comprising means for supplying the prediction of when the device will reach the certain point to another device or to a controller.

43. A system according to claim 34 or any previous claim 34-42, further comprising a robot control unit (218, 219) with means for calculating a path for a robot (118, 119), and calculating a movement or position for a press and means for sending control values for synchronised movement based on the calculations to a control unit (110) or drive unit (111) of a press (100).

44. A system according to claim 34 or any previous claim 34-43, further comprising a robot control unit (218, 219) with means for calculating a path for a robot (118, 119), and calculating motion setpoint values for a press, and means for sending torque and/or speed and/or position setpoint values to a control unit (110) or drive unit (111) of the press (100).

45. A system according to claim 34, further comprising means for controlling said press such that it is reversible from a first rotation direction (R_{C}) to a second rotation direction (R_{AC}) over a plurality of degrees between the stop (stop) of a first press cycle and the start (start) of a second press cycle.

46. A system according to claim 34, further comprising means for controlling said press such that a said press cycle may be carried out in said first rotation direction (S_{C} or R_{C}) and comprise a step of reversing said drive motor at the end of each complete press cycle and operating in a second rotational direction (S_{AC} or R_{AC}).

47. A system according to claim 34, further comprising energy or power management means comprising a power limiter arrangement to limit the total power or peak power of the total consumption of the variable speed electric drive motor (22) and an additional flywheel drive motor (20).

48. A system according to claim 34, wherein said press is arranged controlled by at least two processors (111, 121) or CPUs of which one processor controls the safety devices and the second processor controls the remainder of the devices.

49. A system according to claim 34 or 48, wherein the drive motor (22) of said press is controlled by the control processor or CPU and is used to accelerate the press from one speed to another speed.

50. A system according to claim 34, wherein the at least two processors (111, 121) or CPUs are arranged connected in the system by means of industrial field buses (117, 127).

51. A system according to claim 34, wherein said press line is one of a plurality of press lines.

52. A system according to claim 34, wherein a controller for press motion and/or device motion comprises means (SC, 218, 219) to carry out calculations for synchronisation in the press line.

53. A system according to claim 34, wherein a controller for said press line comprises means (SC, 218, 219) to carry out calculations for synchronisation in the press line.

54. A system according to claim 34, wherein said press line is arranged with at least one electrical power supply device comprising at least one rectifier (201) arranged to supply power simultaneously for more than one electrical motor (20, 22) comprised in said press, another press (Ma-c) or other device (118, 119) of said press line.

55. A system according to claim 34 or 54, wherein the at least one electrical power supply for said press line may comprise any device from the group of: single rectifier, single DC-link, multiple inverters.

56. A system according to claim 55, wherein an electrical electrical power supply device (21b, 201) of the at least one electrical power supply is arranged to supply power to a said press comprising more than one electrical motor.

57. A system according to claim 34, wherein said at least one mechanical press comprises mechanical means for operating the press comprising any transmission type from the group of:
crank, knuckle, link, cam, screw, ball screw, rack-type mechanism.

58. A system according to claim 34, wherein said at least one mechanical press comprises means for measuring a speed and/or position of said drive motor (22).

59. A system according to claim 34, wherein the system comprises at least one said mechanical press comprising an additional drive motor (20) comprising a flywheel (35), which additional drive motor (20) is also arranged to drive said press.

60. A system according to claim 34, wherein the system comprises energy recovery means or storage means for recovering energy in said press synchronised and/or optimised to minimize a peak power consumption of said press line.

61. A system according to claim 34, wherein the system comprises energy recovery means or storage means for recovering energy in said press synchronised and/or optimised so as to minimize an energy consumption of said press line.

62. A system according to claim 34, wherein the system comprises a said press wherein one or more motors are controlled to synchronise a movement of said press to one or more of the at least one said other device(s) such that one first motor (20) is not always mechanically coupled to said press and where the a second motor (22) is always mechanically coupled to said press.

63. A computer program for operating a press line comprising at least one mechanical press with at least one electric drive motor (22), a ram (23), a mechanical means (27, 25) for operating said press, and one other device wherein said press is arranged with at least one electric drive motor (22) for operating said press such that the speed of the at least one said drive motor is varied during at least one said pressing or non-pressing part of a said press cycle, the computer program comprising computer code means and/or software code portions for making a computer or processor perform a method according to any of claims 1-33.

64. One or more computer readable media having thereon a computer program according to claim 63.

65. Use of a system comprising a press line according to any of claims 34-62 for single stroke, continuous operation or both for any operation on metal blanks or workpieces from the group of: pressing, bending, stamping, hot stamping, deep drawing, cutting, notching, blanking, minting, punching.

66. Use of a system comprising a press line according to any of claims 34-62 for single stroke or continuous operation or both for an operation on a material comprising a plastic from any of the group of: pressing, moulding, compression moulding, reaction moulding, reaction injection moulding, blow moulding, dough moulding, injection moulding, thermoplastic moulding.

## Patentansprüche

1. Verfahren zum Betreiben einer Pressenstraße, umfassend wenigstens eine mechanische Presse mit einem elektrischen Antriebsmotor mit variabler Drehzahl (22), einer Ramme (23), einem mechanischen Mittel (27, 25) zum Betreiben der Presse und umfassend wenigstens eine weitere Vorrichtung zum Laden (118), Entladen (119) oder Pressen (100), wobei die andere Vorrichtung eine beliebige aus der Gruppe von: einem Lader, einem Entlader, einem Roboter, einer weiteren Presse, ist und wobei das Verfahren die Schritte umfasst:
- Durchführen einer Synchronisierung während wenigstens eines Press- oder Nichtpressteils eines Presszyklus, wobei diese Synchronisierung das Synchronisieren einer Bewegung der Presse mit einer Bewegung oder Position von wenigstens einer weiteren Vorrichtung in der Pressenstraße umfasst, **gekennzeichnet durch** das Steuern und Variieren der Drehzahl des elektrischen Antriebsmotors mit variabler Drehzahl (22) in einer fortlaufenden oder dynamischen oder anpassenden Weise,
- Synchronisieren einer (eines) Entladevorrichtung oder -roboters während wenigstens eines Teils eines Presszyklus als eine abhängig gesteuerte Vorrichtung der Presse und dann Synchronisieren einer (eines) Ladevorrichtung oder -roboters als eine abhängig gesteuerte Vorrichtung der (des) Entladevorrichtung oder -roboters und dann Synchronisieren der Presse als eine abhängig gesteuerte Vorrichtung der (des) Ladevorrichtung oder -roboters.

2. Verfahren nach Anspruch 1, des Weiteren umfassend das Steuern der weiteren Vorrichtung während des wenigstens eines Press- oder Nichtpressteils eines Presszyklus und das Synchronisieren der Bewegung der weiteren Vorrichtung mit einer Bewegung oder Position der Presse oder einer weiteren Vorrichtung, welche eine weitere Presse in der Pressenstraße sein kann.

3. Verfahren nach Anspruch 2, des Weiteren umfassend das Steuern der Presse und das Synchronisieren einer Bewegung der Presse oder der weiteren Vorrichtung während des wenigstens einen Press-oder Nichtpressteils eines Presszyklus, wobei die Presse und die weitere Vorrichtung entweder abhängig gesteuerte Vorrichtungen zu dieser Vorrichtung sind oder frei sind.

4. Verfahren nach Anspruch 1, des Weiteren umfassend das Steuern der weiteren Vorrichtung und das Synchronisieren mit einer Bewegung einer Vorrichtung, welche die Presse, eine weitere Presse oder eine beliebige weitere Vorrichtung in der Pressenstraße sein kann, während eines ersten Teils eines Presszyklus und das Synchronisieren mit einer Bewegung einer unterschiedlichen Vorrichtung während eines zweiten Teils des Presszyklus.

5. Verfahren nach Anspruch 1 oder 2, des Weiteren umfassend das Steuern der weiteren Vorrichtung, um sie mit einer Bewegung oder Position einer Vorrichtung stromabwärts der weiteren Vorrichtung in der Pressenstraße während eines ersten Teils eines Presszyklus zu synchronisieren und um sie durch das Steuern der Bewegung der weiteren Vorrichtung mit einer Bewegung oder Position einer Vorrichtung stromaufwärts der weiteren Vorrichtung in der Pressenstraße während eines zweiten Teils des Presszyklus zu synchronisieren.

6. Verfahren nach Anspruch 1 oder 2, des Weiteren umfassend das Steuern der weiteren Vorrichtung, um sie so schnell wie möglich während eines ersten Teils eines Presszyklus zu betreiben, und das Steuern der Bewegung der Presse, um die Presse so schnell wie möglich in einem zweiten Teil des Presszyklus zu betreiben.

7. Verfahren nach Anspruch 1 oder 5, des Weiteren umfassend das Berechnen einer Vorhersage, wann eine Vorrichtung (100, 118, 119) einen bestimmten Punkt in einem Teil des Presszyklus erreichen wird.

8. Verfahren nach Anspruch 7, des Weiteren umfassend das Liefern der Vorhersage an eine weitere Vorrichtung oder an einen Controller.

9. Verfahren nach Anspruch 1, wobei die weitere Vorrichtung wenigstens eine Ladevorrichtung oder wenigstens ein Roboter ist, welcher angeordnet ist, um die Presse zu beladen.

10. Verfahren nach Anspruch 1, wobei die weitere Vorrichtung wenigstens eine Entladevorrichtung oder wenigstens ein Roboter ist, welcher angeordnet ist, um die Presse zu entladen.

11. Verfahren nach Anspruch 9 oder 10, wobei die Ladevorrichtung oder Entladevorrichtung oder der Roboter, welcher angeordnet ist, um die Presse zu beladen beziehungsweise zu entladen, auch als eine Entladevorrichtung beziehungsweise Ladevorrichtung einer anderen Presse angeordnet ist.

12. Verfahren nach Anspruch 9 oder 10, wobei die Ladevorrichtung und/oder Entladevorrichtung als zwei Vorrichtungen oder Roboter angeordnet sind, die zusammenarbeiten, um als ein Paar zu beladen und/oder zu entladen.

13. Verfahren nach Anspruch 12, wobei die erste der zwei Vorrichtungen oder Roboter, welche zusammenarbeiten, als eine abhängig gesteuerte Vorrichtung zur zweiten Vorrichtung oder zum zweiten Roboter des Paares gesteuert und synchronisiert wird.

14. Verfahren nach Anspruch 1 oder einem beliebigen vorhergehenden Anspruch, wobei eine Robotersteuereinheit (218, 219) einen Pfad für einen Roboter (118, 119) berechnet und eine Bewegung oder Position für eine Presse berechnet und Steuerwerte für synchronisierte Bewegung an eine Steuereinheit (110) oder Antriebseinheit (111) einer Presse (100) sendet.

15. Verfahren nach Anspruch 1 oder einem beliebigen vorhergehenden Anspruch, wobei eine Robotersteuereinheit (218, 219) einen Pfad für einen Roboter (118, 119) berechnet und Bewegungssollwerte für eine Presse berechnet und Drehmoment- und/oder Drehzahl- und/oder Positionssollwerte an eine Steuereinheit (110) oder Antriebseinheit (111) einer Presse (100) sendet.

16. Verfahren nach einem beliebigen der Ansprüche 1 oder 14 oder 15, des Weiteren umfassend Steuern der Drehzahl eines genannten elektrischen Antriebsmotors (22), um wenigstens einen Pressenzyklus der Presse zu optimieren.

17. Verfahren nach einem beliebigen der Ansprüche 1-16, des Weiteren umfassend Steuern der Drehzahl eines genannten elektrischen Antriebsmotors und Optimieren der Pressenstraße in Abhängigkeit von Parametern aus der Gruppe: Zustand eines stromabwärtigen Vorgangs; Zustand eines stromaufwärtigen Vorgangs; Gesamtleistung oder Energieverbrauch; Glätten der Leistungsverbrauchsspitzen.

18. Verfahren nach einem beliebigen der Ansprüche 1 oder 17, des Weiteren umfassend Steuern der Drehzahl eines genannten elektrischen Antriebsmotors (22) während wenigstens eines Teils eines Presszyklus, um zu warten oder langsamer oder mit verringerter Leistungsanforderung oder verringertem Energieverbrauch zu fahren, während eine Zielzeit für den Presszyklus insgesamt eingehalten wird.

19. Verfahren nach einem beliebigen der Ansprüche 1-18, wobei die Drehzahl (W) eines genannten elektrischen Antriebsmotors (22) während des wenigstens einen Press- oder Nichtpressteils eines Presszyklus der Presse gesteuert wird, um zu variieren, und wobei sie größer ist als die Drehzahl des Antriebsmotors (Wp) während eines Pressteils des Presszyklus.

20. Verfahren nach Anspruch 1, wobei der Presszyklus in einer ersten Rotationsrichtung eines Produktionszyklus ausgeführt werden kann und sich über mehr als 360 Grad des Kurbelwinkels oder der exzentrischen (27) Rotation erstrecken kann.

21. Verfahren nach Anspruch 20, wobei ein genannter Presszyklus, welcher in einer ersten Rotationsrichtung (S_{C}) ausgeführt wird, einen Schritt des Umkehrens des Antriebsmotors am Ende jedes abgeschlossenen Presszyklus und das Betreiben in einer zweiten Rotationsrichtung (S_{AC}) umfasst.

22. Verfahren nach Anspruch 1, wobei die Drehzahl des Antriebsmotors auf einer hohen oder maximalen Drehzahl (W1), die größer ist als die Motordrehzahl während des Pressens (Wp), über eine Zeitspanne gehalten wird.

23. Verfahren nach Anspruch 22, wobei die Drehzahl des Antriebsmotors von einer Pressdrehzahl (Wp) verringert wird und sich einer Nulldrehzahl für eine Zeitspanne während des Pressteils des Presszyklus nähern kann.

24. Verfahren nach Anspruch 23, umfassend eine Steuerungsausgabe an ein Antriebssteuermittel des elektrischen Antriebsmotors, wobei der Motor gebremst wird und die Presse in einem Stillstand bei Erreichen von BDC oder um diesen Punkt herum für eine Zeitspanne (T_{HS}) gehalten wird.

25. Verfahren nach Anspruch 1 oder 21, umfassend das Bereitstellen einer Steuerungsausgabe an ein Antriebssteuermittel des elektrischen Antriebsmotors, um die Ramme in eine Zyklusstartposition für jeden Presszyklus zu bewegen, welche sich eine Mehrzahl von Kurbelwinkelgraden hinten in einer zweiten Rotationsrichtung (R_{AC}) von der vorhergehenden früheren Presszyklusstoppposition oder Nulldrehzahlposition befindet.

26. Verfahren nach Anspruch 21, wobei die Presse von der ersten Rotationsrichtung (R_{C}) in die zweite Rotationsrichtung (R_{AC}) über eine Mehrzahl von Graden zwischen dem Stopp (stop1) eines ersten Presszyklus und dem Start (start2) eines zweiten Presszyklus umkehrt.

27. Verfahren nach Anspruch 1, wobei der Motor so gesteuert ist, dass die Motorrotationsbewegung ihre Richtung von einer ersten Rotationsrichtung (C) in eine zweite und entgegengesetzte Rotationsrichtung (AC) zwischen jedem aufeinanderfolgenden und abgeschlossenen Presszyklus umkehrt.

28. Verfahren nach einem beliebigen der Ansprüche 1-27 wobei der Motor auf eine verringerte Drehzahl oder eine Nulldrehzahl mittels zum Teil regenerativem Bremsen gebremst wird.

29. Verfahren nach Anspruch 1, wobei die Antriebsmotordrehzahl variabel gesteuert ist, um die Presse beim Erreichen der Entladenocke (UC) oder um diesen Punkt herum für eine Zeitspanne zu Synchronisierzwecken zu verlangsamen und die Presse wieder vor Erreichen einer Stempelschutz(DP)-Position oder um diesen Punkt herum des nächsten Presszyklus zu beschleunigen.

30. Verfahren nach einem beliebigen vorangehenden Anspruch, wobei die Pressenstraße wenigstens eine Presse umfasst, welche des Weiteren einen zusätzlichen Antriebsmotor (20) mit einem Schwungrad (35) umfasst.

31. Verfahren nach Anspruch 30, wobei die Drehzahl oder Position des elektrischen Antriebsmotors mit variabler Drehzahl (22) gesteuert wird, um sich mit einer Drehzahl oder Position des Schwungrads (35) oder des zusätzlichen Antriebsmotors (20) der Presse vor und/oder während des Eingreifens einer Kupplung (30) der Presse zu synchronisieren.

32. Verfahren nach Anspruch 31, wobei die Kupplungshandlung mit einer Bewegung oder Position der Presse oder mit dem elektrischen Antriebsmotor mit variabler Drehzahl (22) der Presse synchronisiert wird.

33. Verfahren nach Anspruch 31, wobei der zusätzliche Schwungradantriebsmotor (20) gesteuert wird, um für die Presse oder die Pressenstraße einen beliebigen Wert aus der Gruppe: Spitzenstromverbrauch, Energieverbrauch, Zykluszeit, jede beliebige Kombination, zu optimieren oder zu minimieren.

34. System, umfassend eine Pressenstraße, umfassend wenigstens eine mechanische Presse mit einem elektrischen Antriebsmotor mit variabler Drehzahl (22), einer Ramme (23), einem mechanischen Mittel (27, 25) zum Betreiben der Presse und umfassend wenigstens eine andere Vorrichtung zum Laden (118), Entladen (119) oder Pressen (120), wobei die andere Vorrichtung eine beliebige aus der Gruppe von: einem Lader, einem Entlader, einem Roboter, einer weiteren Presse ist, **dadurch gekennzeichnet, dass** die Presse des Systems so angeordnet ist, dass während wenigstens eines Press- oder Nichtpressteils eines Presszyklus die Presse in einen Synchronisierungszustand eintritt, in welchem die Drehzahl (W) des Antriebsmotors variiert werden kann und die Drehzahl des Antriebsmotors in einer fortlaufenden oder dynamischen oder anpassenden Weise gesteuert wird, so dass eine Bewegung der Presse mit einer Bewegung oder Position der wenigstens einen weiteren Vorrichtung in der Pressenstraße synchronisiert wird und ein(e) Entladevorrichtung oder -roboter während wenigstens eines Teils eines Presszyklus als eine abhängig gesteuerte Vorrichtung zur Presse synchronisiert wird und dann ein(e) Ladevorrichtung oder -roboter als eine abhängig gesteuerte Vorrichtung zur (zum) Entladevorrichtung oder -roboter synchronisiert wird und dann die Presse als eine abhängig gesteuerte Vorrichtung zur Presse zur (zum) Ladevorrichtung oder -roboter synchronisiert wird.

35. System nach Anspruch 34, umfassend Mittel zum Steuern der weiteren Vorrichtung während eines ersten Teils eines Presszyklus und zum Synchronisieren der Bewegung der weiteren Vorrichtung mit einer Bewegung oder Position der Presse oder einer weiteren Vorrichtung, welche eine weitere Presse in der Pressenstraße sein kann.

36. System nach Anspruch 34, wobei ein Lader oder Laderoboter die wenigstens eine weitere Vorrichtung ist und die Presse gesteuert ist, um sich mit einer Bewegung des Laders oder Laderoboters während eines ersten Teils eines Presszyklus zu synchronisieren.

37. System nach Anspruch 34 oder 36, des Weiteren umfassend Mittel zum Steuern der weiteren Vorrichtung und zum Synchronisieren mit einer Bewegung oder Position einer Vorrichtung, welche die Presse, eine weitere Presse oder eine beliebige weitere Vorrichtung in der Pressenstraße sein kann, während eines ersten Teils eines Presszyklus und zum Steuern der Bewegung der Presse und zum Synchronisieren mit einer Bewegung oder Position einer unterschiedlichen Vorrichtung während eines zweiten Teils des Presszyklus.

38. System nach Anspruch 34, des Weiteren umfassend Steuern der weiteren Vorrichtung, um sie mit einer Bewegung oder Position einer stromabwärtigen Vorrichtung, welche die Presse, eine weitere Presse oder eine beliebige weitere Vorrichtung in der Pressenstraße sein kann, während eines ersten Teils eines Presszyklus zu synchronisieren und Steuern der Bewegung der weiteren Vorrichtung, um sie mit einer Bewegung oder Position einer unterschiedlichen Vorrichtung stromaufwärts der weiteren Vorrichtung während eines zweiten Teils des Presszyklus zu synchronisieren.

39. System nach Anspruch 34, des Weiteren umfassend Mittel zum Steuern einer ersten Vorrichtung in der Pressenstraße, welche mit einer zweiten Vorrichtung in der Pressenstraße synchronisiert ist, durch ein Verfahren konstanter Bewegungsverfolgung, wie für erste und zweite Vorrichtungen, die ein erster und ein zweiter Roboter (118, 119) sind.

40. System nach Anspruch 34, des Weiteren umfassend Mittel zum Steuern einer ersten Vorrichtung in der Pressenstraße, welche mit einer zweiten Vorrichtung in der Pressenstraße synchronisiert ist, durch ein Verfahren des Synchronisierens mit einem Punkt oder einer Position für Vorrichtungen wie eine Presse (100a-c) und einen Roboter (118, 119).

41. System nach Anspruch 34, des Weiteren umfassend Mittel zum Berechnen einer Vorhersage, wann eine Vorrichtung (100, 118, 119) einen bestimmten Punkt in einem Teil des Presszyklus erreichen wird.

42. System nach Anspruch 41, des Weiteren umfassend Mittel zum Liefern der Vorhersage, wann die Vorrichtung den bestimmten Punkt erreichen wird, an eine weitere Vorrichtung oder einen Controller.

43. System nach Anspruch 34 oder nach einem beliebigen vorhergehenden Anspruch 34-42, des Weiteren umfassend eine Robotersteuereinheit (218, 219) mit Mitteln zum Berechnen eines Pfades für einen Roboter (118, 119) und zum Berechnen einer Bewegung oder Position für eine Presse und Mittel zum Senden von Steuerwerten für synchronsisierte Bewegung auf der Grundlage der Berechnungen an eine Steuereinheit (110) oder Antriebseinheit (111) einer Presse (100).

44. System nach Anspruch 34 oder nach einem beliebigen vorhergehenden Anspruch 34-43, des Weiteren umfassend eine Robotersteuereinheit (218, 219) mit Mitteln zum Berechnen eines Pfades für einen Roboter (118, 119) und zum Berechnen von Bewegungssollwerten für eine Presse und Mittel zum Senden von Drehmoments- und/oder Drehzahl-und/oder Positions-Sollwerten an eine Steuereinheit (110) oder Antriebseinheit (111) der Presse (100).

45. System nach Anspruch 34, des Weiteren umfassend Mittel zum Steuern der Presse, so dass sie von einer ersten Rotationsrichtung (R_{C}) in eine zweite Rotationsrichtung (R_{AC}) über eine Mehrzahl von Graden zwischen dem Stopp (stop) eines ersten Presszyklus und dem Start (start) eines zweiten Presszyklus umkehrbar ist.

46. System nach Anspruch 34, des Weiteren umfassend Mittel zum Steuern der Presse, so dass ein genannter Presszyklus in die erste Rotationsrichtung (S_{C} oder R_{C}) ausgeführt werden kann, und umfassend einen Schritt des Umkehrens des Antriebsmotors am Ende jedes abgeschlossenen Presszyklus und des Betreibens in einer zweiten Rotationsrichtung (S_{AC} oder R_{AC}).

47. System nach Anspruch 34, des Weiteren umfassend Energie- oder Strommanagementmittel, welche eine Strombegrenzeranordnung umfassen, um den Gesamtstrom oder den Spitzenstrom des Gesamtverbrauchs des elektrischen Antriebsmotors mit variabler Drehzahl (22) und eines zusätzlichen Schwungradmotors (20) zu begrenzen.

48. System nach Anspruch 34, wobei die Presse angeordnet ist, um durch wenigstens zwei Prozessoren (111, 121) oder CPUs gesteuert zu werden, wobei ein Prozessor die Sicherheitsvorrichtungen steuert und der zweite Prozessor den Rest der Vorrichtungen steuert.

49. System nach Anspruch 34 oder 48, wobei der Antriebsmotor (22) der Presse durch den Steuerprozessor oder die CPU gesteuert ist und verwendet wird, um die Presse von einer Drehzahl zu einer anderen Drehzahl zu beschleunigen.

50. System nach Anspruch 34, wobei die wenigstens zwei Prozessoren (111, 121) oder CPUs angeordnet sind, um im System mittels industrieller Feldbusse (117, 127) verbunden zu sein.

51. System nach Anspruch 34, wobei die Pressenstraße eine aus einer Mehrzahl von Pressenstraßen ist.

52. System nach Anspruch 34, wobei ein Controller für Pressbewegung und/oder Vorrichtungsbewegung Mittel (SC, 218, 219) umfasst, um Berechnungen für die Synchronisierung in der Pressenstraße auszuführen.

53. System nach Anspruch 34, wobei ein Controller für die Pressenstraße Mittel (SC, 218, 219) umfasst, um Berechnungen für die Synchronisierung in der Pressenstraße auszuführen.

54. System nach Anspruch 34, wobei die Pressenstraße mit wenigstens einer elektrischen Stromversorgungsvorrichtung angeordnet ist, welche wenigstens einen Gleichrichter (201) umfasst, der angeordnet ist, um Strom gleichzeitig für mehr als einen elektrischen Motor (20, 22), der in der Presse, einer weiteren Presse (Ma-c) oder einer weiteren Vorrichtung (118, 119) der Pressenstraße vorhanden ist, bereitzustellen.

55. System nach Anspruch 34 oder 54, wobei die wenigstens eine elektrische Stromversorgungsvorrichtung für die Pressenstraße jede beliebige Vorrichtung aus der Gruppe: einzelner Gleichrichter, einzelner Zwischenkreis, mehrfache Umrichter, umfassen kann.

56. System nach Anspruch 55, wobei eine elektrische Stromversorgungsvorrichtung (21b, 201) der wenigstens einen elektrischen Stromversorgung angeordnet ist, um Strom für die Presse, welche mehr als einen Elektromotor umfasst, bereitzustellen.

57. System nach Anspruch 34, wobei die wenigstens eine mechanische Presse mechanische Mittel zum Betreiben der Presse umfasst, welche einen beliebigen Getriebetyp aus der Gruppe: Kurbel-, Kniehebel-, Gestänge, Nocken-, Schraub-, Kugelumlaufspindel-, Zahnstangenmechanismus aufweist.

58. System nach Anspruch 34, wobei die wenigstens eine mechanische Presse Mittel zum Messen einer Drehzahl und/oder Position des Antriebsmotors (22) umfasst.

59. System nach Anspruch 34, wobei das System wenigstens eine mechanische Presse umfasst, welche einen zusätzlichen Antriebsmotor (20) mit einem Schwungrad (35) aufweist, wobei der zusätzliche Antriebsmotor (20) auch angeordnet ist, um die Presse anzutreiben.

60. System nach Anspruch 34, wobei das System Energierückgewinnungsmittel oder Energiespeichermittel zum Rückgewinnen von Energie in der Presse umfasst, welche synchronisiert und/oder optimiert ist, um einen Spitzenstromverbrauch der Pressenstraße zu minimieren.

61. System nach Anspruch 34, wobei das System Energierückgewinnungsmittel oder Energiespeichermittel zum Rückgewinnen von Energie in der Presse umfasst, welche synchronisiert und/oder optimiert ist, um einen Energieverbrauch der Pressenstraße zu minimieren.

62. System nach Anspruch 34, wobei das System eine genannte Presse umfasst, wobei ein oder mehrere Motor(en) gesteuert ist (sind), um eine Bewegung der Presse mit einer oder mehreren der wenigstens einen der weiteren Vorrichtung(en) zu synchronisieren, so dass ein erster Motor (20) nicht immer mechanisch mit der Presse gekoppelt ist und wobei ein zweiter Motor (22) immer mechanisch mit der Presse gekoppelt ist.

63. Computerprogramm zum Betreiben einer Pressenstraße, welche wenigstens eine mechanische Presse mit wenigstens einem elektrischen Antriebsmotor (22), einer Ramme (23), einem mechanischen Mittel (27, 25) zum Betreiben der Presse und einer weiteren Vorrichtung umfasst, wobei die Presse mit wenigstens einem elektrischen Antriebsmotor (22) zum Betreiben der Presse angeordnet ist, so dass die Drehzahl des wenigstens einen Antriebsmotors während wenigstens eines Press- oder Nichtpressteils eines genannten Presszyklus variiert wird, wobei das Computerprogramm Computercodemittel und/oder Softwarecodeabschnitte umfasst, um einen Computer oder Prozessor ein Verfahren nach einem beliebigen der Ansprüche 1-33 durchführen zu lassen.

64. Ein oder mehrere computerlesbare Medien, welche darauf ein Computerprogramm nach dem Anspruch 63 aufweisen.

65. Einsatz eines Systems, welches eine Pressenstraße nach einem beliebigen der Ansprüche 34-62 umfasst für Einzelhub, ununterbrochenen Betrieb oder beides für jedweden Arbeitsgang an Metallzuschnitten oder Werkstücken aus der Gruppe: Pressen, Biegen, Prägen, Heißprägen, Tiefziehen, Schneiden, Ausklinken, Ausstanzen, Feinprägen, Stanzen.

66. Einsatz eines Systems, welches eine Pressenstraße nach einem beliebigen der Ansprüche 34-62 umfasst für Einzelhub oder ununterbrochenen Betrieb oder beides für eine Bearbeitung an einem Material, welches einen Kunststoff umfasst, aus der Gruppe: Pressen, Formen, Formpressen, Reaktionsgießformen, Reaktionsspritzgießformen, Blasformen, BMC-Teigformen, Spritzformen, thermoplastisches Formen.

## Revendications

1. Procédé pour faire marcher une ligne de presses comprenant au moins une presse mécanique avec un moteur électrique d'entraînement à vitesse variable (22), un vérin (23), un moyen mécanique (27, 25) pour faire marcher ladite presse, et comprenant au moins un autre dispositif pour charger (118), pour décharger (119) ou pour emboutir (100), lequel dit autre dispositif est n'importe dispositif parmi le groupe comprenant : un dispositif de chargement, un dispositif de déchargement, un robot, une autre presse, et ce procédé comprenant les étapes consistant à :
- effectuer une synchronisation pendant au moins une partie d'emboutissage ou une partie de non emboutissage d'un cycle de presse, laquelle synchronisation comprend la synchronisation d'un mouvement de ladite presse avec un mouvement ou une position d'au moins un dit autre dispositif dans ladite ligne de presses, cette synchronisation étant **caractérisée par** le réglage et la variation de la vitesse dudit moteur électrique d'entraînement à vitesse variable (22) d'une manière continue ou dynamique ou versatile,
- synchroniser un dispositif ou un robot de déchargement pendant au moins une partie d'un cycle de presse comme asservi à ladite presse, puis synchroniser un dispositif ou un robot de chargement comme asservi au dispositif ou au robot de déchargement, puis synchroniser ladite presse comme asservie au dispositif ou au robot de chargement.

2. Procédé selon la revendication 1, comprenant en outre la commande dudit autre dispositif pendant l'au moins une partie d'emboutissage ou de non emboutissage d'un cycle de presse et la synchronisation du mouvement dudit autre dispositif avec un mouvement ou une position de ladite presse, ou d'un autre dispositif qui peut être une autre presse dans ladite ligne de presses.

3. Procédé selon la revendication 2, comprenant en outre la commande de ladite presse et la synchronisation d'un mouvement de ladite presse ou dudit autre dispositif pendant l'au moins une partie d'emboutissage ou de non emboutissage d'un cycle de presse, dans lequel ladite presse et ledit autre dispositif sont soit asservis au dispositif, soit libres.

4. Procédé selon la revendication 1, comprenant en outre la commande dudit autre dispositif et la synchronisation à un mouvement d'un dispositif qui peut être ladite presse, une autre presse ou n'importe quel autre dispositif dans ladite ligne de presses pendant une première partie d'un cycle de presse et la synchronisation avec un mouvement d'un dispositif différent pendant une deuxième partie du cycle de presse.

5. Procédé selon la revendication 1 ou 2, comprenant en outre la commande dudit autre dispositif afin de le synchroniser avec un mouvement ou une position d'un dispositif en aval dudit autre dispositif dans ladite ligne de presses pendant une première partie d'un cycle de presse et en commandant le mouvement dudit autre dispositif afin de le synchroniser avec un mouvement ou une position d'un dispositif en amont dudit autre dispositif dans ladite ligne de presses pendant une deuxième partie du cycle de presse.

6. Procédé selon la revendication 1 ou 2, comprenant en outre la commande dudit autre dispositif afin de le faire marcher aussi vite que possible pendant une première partie d'un cycle de presse et la commande du mouvement de ladite presse afin de faire marcher la presse aussi vite que possible dans une deuxième partie du cycle de presse.

7. Procédé selon la revendication 1 ou 5, comprenant en outre le calcul d'une prédiction du moment auquel un dispositif (100, 118, 119) atteindra un certain point dans une partie du cycle de presse.

8. Procédé selon la revendication 7, comprenant en outre la fourniture de cette prédiction à un autre dispositif ou à un contrôleur.

9. Procédé selon la revendication 1, dans lequel ledit autre dispositif est au moins un dispositif de chargement ou au moins un robot agencé de façon à charger ladite presse.

10. Procédé selon la revendication 1, dans lequel ledit autre dispositif est au moins un dispositif de déchargement ou au moins un robot agencé de façon à décharger ladite presse.

11. Procédé selon la revendication 9 ou 10, dans lequel le dispositif ou le robot de chargement ou de déchargement agencé de façon à charger, ou décharger respectivement, ladite presse est aussi agencé comme dispositif de déchargement, ou respectivement comme dispositif de chargement, d'une autre presse.

12. Procédé selon la revendication 9 ou 10, dans lequel le dispositif de chargement et/ou de déchargement est agencé comme deux dispositifs ou robots travaillant ensemble pour charger et/ou décharger en tant que paire.

13. Procédé selon la revendication 12, dans lequel le premier des deux dispositifs ou robots travaillant ensemble est commandé et synchronisé comme asservi au deuxième dispositif ou robot de la paire.

14. Procédé selon la revendication 1 ou selon l'une quelconque des revendications précédentes, dans lequel une unité de commande de robot (218, 219) calcule un trajet pour un robot (118, 119), et calcule un mouvement ou une position pour une presse et envoie des valeurs de commande pour un mouvement synchronisé à une unité de commande (110) ou à une unité d'entraînement (111) d'une presse (100).

15. Procédé selon la revendication 1 ou selon l'une quelconque des revendications précédentes, dans lequel une unité de commande de robot (218, 219) calcule un trajet pour un robot (118, 119), et calcule des valeurs de consigne de mouvement pour une presse et envoie des valeurs de consigne de couple et/ou de vitesse et/ou de position à une unité de commande (110) ou à une unité d'entraînement (111) d'une presse (100).

16. Procédé selon l'une quelconque des revendications 1 ou 14 ou 15, comprenant en outre le réglage de la vitesse dudit moteur électrique d'entraînement (22) afin d'optimiser au moins un cycle de presse de ladite presse.

17. Procédé selon l'une quelconque des revendications 1 à 16, comprenant en outre le réglage de la vitesse d'un dit moteur électrique d'entraînement et l'optimisation de ladite ligne de presses selon des paramètres parmi le groupe comprenant : un état d'un procédé en aval ; un état d'un procédé en amont ; la consommation globale de puissance ou d'énergie ; le lissage des pointes de consommation de puissance.

18. Procédé selon l'une quelconque des revendications 1 ou 17, comprenant en outre le réglage de la vitesse d'un dit moteur électrique d'entraînement (22) pendant au moins une partie d'un cycle de presse pour attendre ou faire marcher plus lentement avec une demande de puissance ou une consommation d'énergie réduites tout en restant dans les limites d'un temps cible pour le cycle de presse dans son ensemble.

19. Procédé selon l'une quelconque des revendications 1 à 18, dans lequel la vitesse (W) d'un dit moteur électrique d'entraînement (22) pendant l'au moins une partie d'emboutissage ou de non emboutissage d'un cycle de presse de ladite presse est réglée de façon à varier et est plus grande que la vitesse dudit moteur d'entraînement (Wp) pendant une partie d'emboutissage du cycle de presse.

20. Procédé selon la revendication 1, dans lequel ledit cycle de presse peut être effectué dans un premier sens de rotation d'un cycle de production et s'étendre sur plus de 360 degrés d'angle de vilebrequin ou de rotation excentrique (27).

21. Procédé selon la revendication 20, dans lequel un dit cycle de presse effectué dans ledit premier sens de rotation (S_{C}) comprend une étape de renversement de marche dudit moteur d'entraînement à la fin de chaque cycle de presse complet et de marche dans un deuxième sens de rotation (S_{AC}).

22. Procédé selon la revendication 1, dans lequel la vitesse dudit moteur d'entraînement est maintenue à une grande vitesse ou à une vitesse maximum (W1) plus grande que la vitesse du moteur pendant l'emboutissage (Wp) pendant une période de temps.

23. Procédé selon la revendication 22, dans lequel la vitesse dudit moteur d'entraînement est réduite d'une vitesse d'emboutissage (Wp) et peut se rapprocher d'une vitesse nulle pendant un période de temps pendant la partie d'emboutissage dudit cycle de presse.

24. Procédé selon la revendication 23, comprenant la fourniture d'une sortie de commande à un moyen de commande d'entraînement du moteur électrique d'entraînement lorsque ledit moteur est décéléré et que la presse est maintenue immobile lorsqu'on atteint le PMB, ou à peu près, pendant une période de temps (T_{HS}).

25. Procédé selon la revendication 1 ou 21, comprenant la fourniture d'une sortie de commande à un moyen de commande d'entraînement du moteur électrique d'entraînement pour mettre ledit vérin dans une position de début de cycle pour chaque cycle de presse qui est une pluralité de degrés d'angle de vilebrequin en arrière dans un deuxième sens de rotation (R_{AC}) par rapport à la position d'arrêt du cycle de presse précédent ou à la position de vitesse nulle.

26. Procédé selon la revendication 21, dans lequel ladite presse renverse sa marche du premier sens de rotation (R_{C}) au deuxième sens de rotation (R_{AC}) sur une pluralité de degrés entre l'arrêt (stop1) d'un premier cycle de presse et le début (start2) d'un deuxième cycle de presse.

27. Procédé selon la revendication 1, dans lequel ledit moteur est commandé de manière à ce que le mouvement de rotation dudit moteur change de sens d'un premier sens de rotation (C) à un deuxième sens de rotation opposé (AC) entre chaque cycle de presse successif et complet.

28. Procédé selon l'une quelconque des revendications 1 à 27, dans lequel ledit moteur est décéléré jusqu'à une vitesse réduite ou une vitesse nulle par un moyen partiellement de freinage par récupération.

29. Procédé selon la revendication 1, dans lequel la vitesse du moteur d'entraînement est réglée de manière variable de façon à ralentir la presse lorsqu'on atteint la position 'came de déchargement' (UC) ou à peu près pendant une période de temps pour des besoins de synchronisation et à refaire accélérer la presse avant qu'on atteigne la position 'protection de matrice' (DP), ou à peu près, du cycle de presse suivant.

30. Procédé selon l'une quelconque des revendications précédentes, dans lequel ladite ligne de presses comprend au moins une presse qui comprend en outre un moteur d'entraînement supplémentaire (20) comportant un volant (35).

31. Procédé selon la revendication 30, dans lequel la vitesse ou la position dudit moteur électrique d'entraînement à vitesse variable (22) est réglée de façon à le synchroniser avec une vitesse ou une position du volant (35) ou du moteur d'entraînement supplémentaire (20) de ladite presse avant et/ou pendant l'engrenage d'un embrayage (30) de ladite presse.

32. Procédé selon la revendication 31, dans lequel l'actionnement de l'embrayage est synchronisé avec un mouvement ou une position de ladite presse ou avec le moteur électrique d'entraînement à vitesse variable (22) de ladite presse.

33. Procédé selon la revendication 31, dans lequel le moteur d'entraînement supplémentaire à volant (20) est commandé de façon à optimiser ou minimiser pour ladite presse ou ladite ligne de presses n'importe lequel des paramètres parmi le groupe comprenant : consommation de puissance de pointe, consommation d'énergie, temps du cycle, n'importe quelle combinaison.

34. Système comportant une ligne de presses comprenant au moins une presse mécanique avec un moteur électrique d'entraînement à vitesse variable (22), un vérin (23), un moyen mécanique (27, 25) pour faire marcher ladite presse, et au moins un autre dispositif pour charger (118), pour décharger (119) ou pour emboutir (120), lequel dit autre dispositif est n'importe lequel parmi le groupe comprenant : un dispositif de chargement, un dispositif de déchargement, un robot, une autre presse, **caractérisé en ce que** ladite presse dudit système est agencée de manière à ce que, pendant au moins une partie d'emboutissage ou de non emboutissage d'un cycle de presse, la presse entre dans un état de synchronisation dans lequel la vitesse (W) dudit moteur d'entraînement peut être variée et la vitesse dudit moteur d'entraînement est réglée d'une manière continue ou dynamique ou versatile, de manière à ce qu'un mouvement de ladite presse soit synchronisé avec un mouvement ou une position d'au moins un dit autre dispositif dans ladite ligne de presses, et un dispositif ou un robot de déchargement est synchronisé pendant au moins une partie d'un cycle de presse comme asservi à ladite presse, puis un dispositif ou un robot de chargement est synchronisé comme asservi au dispositif ou au robot de déchargement, puis ladite presse est synchronisée comme asservie au dispositif ou au robot de chargement.

35. Système selon la revendication 34, comprenant un moyen pour commander ledit autre dispositif pendant une première partie d'un cycle de presse et pour synchroniser le mouvement dudit autre dispositif avec un mouvement ou une position de ladite presse, ou d'un autre dispositif qui peut être une autre presse dans ladite ligne de presses.

36. Système selon la revendication 34, dans lequel un dispositif ou un robot de chargement est l'au moins un autre dit dispositif et ladite presse est commandée de façon à être synchronisée avec un mouvement du dispositif ou du robot de chargement pendant une première partie d'un cycle de presse.

37. Système selon la revendication 34 ou 36, comprenant en outre un moyen pour commander ledit autre dispositif et pour le synchroniser avec un mouvement ou une position d'un dispositif qui peut être ladite presse, une autre presse ou tout autre dispositif dans ladite ligne de presses pendant une première partie d'un cycle de presse et pour commander le mouvement de ladite presse et pour la synchroniser avec un mouvement ou une position d'un dispositif différent pendant une deuxième partie du cycle de presse.

38. Système selon la revendication 34, comprenant en outre la commande dudit autre dispositif afin de le synchroniser avec un mouvement ou une position d'un dispositif en aval qui peut être ladite presse, une autre presse ou n'importe quel autre dispositif dans ladite ligne de presses pendant une première partie du cycle de presse et la commande du mouvement dudit autre dispositif afin de le synchroniser avec un mouvement ou une position d'un dispositif différent en amont dudit autre dispositif pendant une deuxième partie du cycle de presse.

39. Système selon la revendication 34, comprenant en outre un moyen pour commander un premier dispositif dans ladite ligne de presses synchronisé avec un deuxième dispositif dans ladite ligne de presses par un procédé suivant un mouvement constant, comme pour le premier et le deuxième dispositif étant un premier et un deuxième robot (118, 119).

40. Système selon la revendication 34, comprenant en outre un moyen pour commander un premier dispositif dans ladite ligne de presses synchronisé avec un deuxième dispositif dans ladite ligne de presses par un procédé de synchronisation avec un point ou une position, pour les dispositifs tels qu'une presse (100a-c) et un robot (118, 119).

41. Système selon la revendication 34, comprenant en outre un moyen pour calculer une prédiction du moment auquel un dispositif (100, 118, 119) atteindra un certain point dans une partie du cycle de presse.

42. Système selon la revendication 41, comprenant en outre un moyen pour fournir cette prédiction du moment auquel le dispositif atteindra le certain point à un autre dispositif ou à un contrôleur.

43. Système selon la revendication 34 ou selon l'une quelconque des revendications précédentes 34 à 42, comprenant en outre une unité de commande de robot (218, 219) avec un moyen pour calculer un trajet pour un robot (118, 119), et pour calculer un mouvement ou une position pour une presse et un moyen pour envoyer des valeurs de commande pour un mouvement synchronisé basé sur ces calculs à une unité de commande (110) ou à une unité d'entraînement (111) d'une presse (100).

44. Système selon la revendication 34 ou selon l'une quelconque des revendications précédentes 34 à 43, comprenant en outre une unité de commande de robot (218, 219) avec un moyen pour calculer un trajet pour un robot (118, 119), et pour calculer des valeurs de consigne de mouvement pour une presse, et un moyen pour envoyer des valeurs de consigne de couple et/ou de vitesse et/ou de position à une unité de commande (110) ou à une unité d'entraînement (111) de la presse (100).

45. Procédé selon la revendication 34, comprenant en outre un moyen pour commander ladite presse de manière à ce que sa marche puisse être renversée d'un premier sens de rotation (R_{C}) à un deuxième sens de rotation (R_{AC}) sur une pluralité de degrés entre l'arrêt (stop) d'un premier cycle de presse et le début (start) d'un deuxième cycle de presse.

46. Procédé selon la revendication 34, comprenant en outre un moyen pour commander ladite presse de manière à ce qu'un dit cycle de presse puisse être effectué dans ledit premier sens de rotation (S_{C} ou R_{C}) et comprenne une étape de renversement de la marche dudit moteur d'entraînement à la fin de chaque cycle de presse complet et de marche dans un deuxième sens de rotation (S_{AC} or R_{AC}).

47. Système selon la revendication 34, comprenant en outre un moyen de gestion d'énergie ou de puissance comprenant un agencement de limitation de puissance pour limiter la puissance totale ou la puissance de pointe de la consommation totale du moteur électrique d'entraînement à vitesse variable (22) et d'un moteur d'entraînement supplémentaire à volant (20).

48. Système selon la revendication 34, dans lequel ladite presse est agencée de façon à être commandée par au moins deux processeurs (111, 121) ou unités centrales dont un processeur commande les dispositifs de sécurité et le deuxième processeur commande le reste des dispositifs.

49. Système selon la revendication 34 ou 48, dans lequel le moteur d'entraînement (22) de ladite presse est commandé par le processeur ou l'unité centrale de commande et est utilisé pour faire accélérer la presse d'une vitesse à une autre vitesse.

50. Système selon la revendication 34, dans lequel les au moins deux processeurs (111, 121) ou unités centrales sont agencés de façon à être connectés dans le système au moyen de bus de terrain industriels (117, 127).

51. Système selon la revendication 34, dans lequel ladite ligne de presses est une d'une pluralité de lignes de presses.

52. Système selon la revendication 34, dans lequel un contrôleur pour le mouvement des presses et/ou le mouvement des dispositifs comprend des moyens (SC, 218, 219) pour effectuer des calculs pour la synchronisation dans la ligne de presses.

53. Système selon la revendication 34, dans lequel un contrôleur pour ladite ligne de presses comprend des moyens (SC, 218, 219) pour effectuer des calculs pour la synchronisation dans la ligne de presses.

54. Système selon la revendication 34, dans lequel ladite ligne de presses est agencée avec au moins un dispositif d'alimentation en courant électrique comprenant au moins un redresseur (201) agencé de façon à alimenter du courant simultanément pour plus d'un moteur électrique (20, 22) compris dans ladite presse, une autre presse (Ma-c) ou un autre dispositif (118, 119) de ladite ligne de presses.

55. Système selon la revendication 34 ou 54, dans lequel l'au moins une alimentation en courant électrique pour ladite ligne de presses peut comprendre n'importe quel dispositif parmi le groupe comprenant : redresseur unique, liaison à courant continu unique, onduleurs multiples.

56. Système selon la revendication 55, dans lequel un dispositif d'alimentation en courant électrique (21b, 201) de l'au moins une alimentation en courant électrique est agencé de façon à alimenter du courant à une dite presse comprenant plus d'un moteur électrique.

57. Système selon la revendication 34, dans lequel ladite au moins une presse mécanique comprend un moyen mécanique pour faire marcher la presse comportant n'importe quel type de transmission parmi le groupe comprenant : vilebrequin, rotule, bielle, came, vis, vis à billes, mécanisme de type à crémaillère.

58. Système selon la revendication 34, dans lequel ladite au moins une presse mécanique comprend un moyen pour mesurer une vitesse et/ou une position dudit moteur d'entraînement (22).

59. Système selon la revendication 34, ce système comprenant au moins une dite presse mécanique comprenant un moteur d'entraînement supplémentaire (20) comportant un volant (35), lequel moteur d'entraînement supplémentaire (20) est aussi agencé de façon à entraîner ladite presse.

60. Système selon la revendication 34, ce système comprenant un moyen de récupération d'énergie ou un moyen de stockage pour récupérer de l'énergie dans ladite presse, synchronisé et/ou optimisé de façon à minimiser une consommation de puissance de pointe de ladite ligne de presses.

61. Système selon la revendication 34, ce système comprenant un moyen de récupération d'énergie ou un moyen de stockage pour récupérer de l'énergie dans ladite presse, synchronisé et/ou optimisé de façon à minimiser une consommation d'énergie de ladite ligne de presses.

62. Système selon la revendication 34, ce système comprenant une dite presse dans laquelle un ou plusieurs moteurs sont commandés de façon à synchroniser un mouvement de ladite presse avec un ou plusieurs des au moins un dits dispositifs de manière à ce qu'un premier moteur (20) ne soit pas toujours accouplé mécaniquement à ladite presse et un deuxième moteur (22) étant toujours accouplé mécaniquement à ladite presse.

63. Programme informatique pour faire marcher une ligne de presses comprenant au moins une presse mécanique avec au moins un moteur électrique d'entraînement (22), un vérin (23), un moyen mécanique (27, 25) pour faire marcher ladite presse, et un autre dispositif, ladite presse étant agencée avec au moins un moteur électrique d'entraînement (22) pour faire marcher ladite presse de manière à ce que la vitesse de l'au moins un dit moteur d'entraînement soit variée pendant au moins une dite partie d'emboutissage ou de non emboutissage d'un dit cycle de presse, ce programme informatique comprenant un moyen code machine et/ou des parties codes de logiciel pour faire exécuter à un ordinateur ou à un processeur un procédé selon l'une quelconque des revendications 1 à 33.

64. Un ou plusieurs supports lisibles par ordinateur ayant sur eux un programme complet selon la revendication 63.

65. Utilisation d'un système comprenant une ligne de presses selon l'une quelconque des revendications 34 à 62 pour la marche coup par coup, la marche continue ou les deux, pour n'importe quelle opération sur des flans ou des pièces à travailler métalliques parmi le groupe comprenant : l'emboutissage, le pliage, l'estampage, l'estampage à chaud, l'emboutissage profond, le coupage, l'encochage, le découpage, le monnayage, le poinçonnage.

66. Utilisation d'un système comprenant une ligne de presses selon l'une quelconque des revendications 34 à 62 pour la marche coup par coup, la marche continue ou les deux, pour une opération sur un matériau comprenant un plastique parmi le groupe comprenant : le formage à la presse, le moulage, le moulage par compression, le moulage par réaction, le moulage par injection et réaction, le moulage par soufflage, le moulage en pâte, le moulage par injection, le moulage thermoplastique.
